# EUROPEAN PATENT APPLICATION

(11) **EP 4 501 499 A1**
(43) Date of publication of application: **05.02.2025**
(21) Application number: 24190263.4
(22) Date of filing: 23.07.2024
(51) Int. Cl.: B22F 10/366, B22F 10/28, B22F 10/36, B22F 10/362, B22F 10/364, B22F 10/85, B33Y 10/00, B33Y 50/02, B22F 10/38

(54) **GENERATION AND EXECUTION OF MELTING PATHS IN ADDITIVE MANUFACTURING**

(30) Priority: 31.07.2023 US 202318228198
(71) Applicant: Arcam AB, 435 33 Mölnlycke (SE)
(72) Inventor: RAMSPERGER, Markus, SE-435 33 Molnlycke (SE); MALMBERG, John Bondestam, SE-435 33 Molnlycke (SE); DAHL, Alexander, SE-435 33 Molnlycke (SE)
(74) Representative: Hafner & Kohl PartmbB

(57) **Abstract**

A method for generating a melt strategy for an additive manufacturing system (100) comprises: receiving geometry data (610, 620, 710) corresponding to a surface (240) of a powder bed (142); populating the geometry data (610, 620, 710) with melting points (621, 713, 801, 802, 803, 804, 805, 806, 807); assigning at least one treatment action to each melting point (621, 713, 801, 802, 803, 804, 805, 806, 807); assigning a melt parameter and a prerequisite thermal characteristic to each treatment action; generating a preliminary list; creating a revised order comprising a plurality of sequential unpopulated items; and populating the revised order by: identifying an earliest unpopulated item, determining if any treatment action comprises prerequisite thermal characteristics satisfied for a time of the earliest unpopulated item, assigning an assignment to the earliest unpopulated item; removing the treatment action comprising prerequisite thermal characteristics which are satisfied for the sequential time of the earliest unpopulated item from the preliminary list, classifying the earliest unpopulated item as a populated item, and returning to identifying the earliest unpopulated item..

## Description

### TECHNICAL FIELD

The present disclosure generally relates to additive manufacturing processes and, more specifically, to generating and executing melting paths in an additive manufacturing system.

### BACKGROUND

Additive manufacturing processes have become more common in recent years to produce parts for various purposes. For example, electron beam melting (EBM) is an Additive Manufacturing (AM) process that may be used to fabricate precision three-dimensional (3D) metal components from a digital model by melting powdered metal with a high-energy beam of electrons. Such components can be fabricated using an additive process, where successive layers of powdered metal are melted and solidified one on top of the other. Existing melt strategies face issues with manufacturing parts having complex geometries, such as controlling a microstructure of the part, limiting or eliminating defects, and providing manufacturing efficiency for arbitrary complex geometries.

### BRIEF DESCRIPTION OF THE DRAWINGS

FIG. 1 schematically depicts a side view of an illustrative additive manufacturing system, according to one or more embodiments shown and described herein;
FIG. 2 schematically depicts a detailed side view of a portion of an additive manufacturing system during an additive manufacturing process, according to one or more embodiments shown and described herein;
FIG. 3 schematically depicts a detailed side view of a portion of an additive manufacturing system during an additive manufacturing process, according to one or more embodiments shown and described herein;
FIG. 4 schematically depicts an illustrative additive manufacturing system that includes a computer system according to one or more embodiments shown and described herein;
FIG. 5A depicts a flow diagram of an illustrative process of generating a melting path for an additive manufacturing system, according to one or more embodiments shown and described herein;
FIG. 5B depicts a flow diagram of an illustrative process of populating a revised processing order during generation of a melting path for an additive manufacturing system, according to one or more embodiments shown and described herein;
FIG. 6A schematically depicts an illustrative first geometry data of a layer of untreated material, according to one or more embodiments shown and described herein;
FIG. 6B schematically depicts an illustrative second geometry data of a layer of untreated material, according to one or more embodiments shown and described herein;
FIG. 7A schematically depicts an illustrative third geometry data having adaptively spaced lines, according to one or more embodiments shown and described herein;
FIG. 7B schematically depicts illustrative geometry data having adaptively spaced curves, according to one or more embodiments shown and described herein; and
FIG. 8 schematically depicts an illustrative melt path within the illustrative first geometry data of a layer of untreated material, according to one or more embodiments shown and described herein.

### DETAILED DESCRIPTION

The present disclosure generally relates to devices, systems, and methods for generating a melt path in a 3D printing process. This 3D printing process can include moving energy beam-based bonding and/or fusion methods, including Electron Beam Melting (EBM) Additive Manufacturing (AM) processes, and other 3D printing processes, including Direct Metal Laser Melting (DMLM), Directed Energy Deposition (DED), and Fused Deposition Modeling (FDM).

The present disclosure relates to these and other additive manufacturing methods that include a build file specifying a moving source (deposition nozzle, electron beam, among other features) that melts and/or solidifies material with some local shape. In general, computer-aided design (CAD) software may be used to design a 3D part and store this part in a CAD file. At least some additive manufacturing systems involve the buildup of a powdered material (e.g., a metal powder) to make a component based off a CAD file. This method can produce complex components from materials at a reduced cost and with improved manufacturing efficiency.

Electron-beam additive manufacturing, which may also be known as electron-beam melting, is a type of additive manufacturing process that is typically used for metallic components. EBM utilizes a raw material in the form of a metal powder or a metal wire, which is placed under a vacuum (e.g., within a vacuum sealed build chamber). Generally speaking, the raw material is fused together from heating (e.g., melting) via an electron beam.

The embodiments described herein that utilize EBM generally obtain data from a 3D computer-aided design (CAD) model and use the data to place successive layers of the raw material using an apparatus to spread the raw material, such as a powder distributor. The successive layers are melted together utilizing one or more electronically-controlled electron beams. As noted above, the process takes place within a vacuum sealed build chamber, which makes the process suited to manufacture parts using reactive materials (e.g., titanium, tantalum, vanadium, zirconium, hafnium, and/or thorium) having a high affinity for oxygen (e.g., having a higher tendency, when compared to other metals, to oxidize). In embodiments, the process operates at higher temperatures (up to about 1000 °C) relative to other additive manufacturing processes, which can lead to differences in phase formation through solidification and solid-state phase transformation.

EBM is an additive manufacturing process that uses one or more electron beams to melt thin layers of metal powder to build 3D objects. Parts are built directly from a file generated from CAD (computer-aided design) data. The file is converted to a sliced file through machine software, which can be uploaded to a machine for the build process. In embodiments, conversion of the file to a sliced file and/or uploading of the sliced file to the machine may occur during processing or before processing. In embodiments, conversion of the file to a sliced file and/or uploading of the sliced file to the machine may be performed by the machine or by a computer separate from the machine. The use of an electron beam to selectively melt thin layers of tiny particles yields objects exhibiting fine, dense and homogeneous characteristics. A fundamental challenge that remains to be solved in 3D printing processes is distortion mitigation. In addition, build files contain potentially problematic areas within three-dimensionally printed parts. Analyzing these areas and predicting them within an additive manufacturing system in an efficient and effective manner can ensure the integrity of the objects that are created.

EBM additive manufacturing processes may be employed to create manufactured objects such as single crystal parts for, e.g., the creation of superalloy components. Production of single crystal parts in additive manufacturing processes may use a single continuous melt path, controlling gradients in a layer of metal powder, and controlling solidification speed of fused metal powder. Embodiments described herein provide for the generation and execution of melt paths which balance thermal constraints within a complex shape and can, as such, be used to produce single crystal parts with a complex shape and/or drive an efficient grain selection process for a single crystal part. In embodiments, generating such melt paths include thermally adaptive point-based melting strategies for creating components with complex geometries. In embodiments, such components include single crystal parts of alloys or superalloys. In embodiments, a superalloy is an alloy capable of withstanding high temperatures and/or having high strength. In embodiments, such components include single crystal parts of nickel- and/or cobalt-based superalloys. By way of non-limiting examples, such single crystal parts of superalloys may comprise PWA 1480 superalloys, SR99 superalloys, CMSX-4 superalloys, TMS-26 superalloys, Rene N5 superalloys, Rene N6 superalloys, Rene N15 superalloys, CM186LC superalloys, CMSX-10 superalloys, TMS-82 superalloys, TMS-162 superalloys, or other superalloys. In embodiments, such components include single crystal parts of refractory alloys. By way of non-limiting examples, such single crystal parts of refractory alloys may comprise Mo-based refractory alloys, W-based refractory alloys, Ta-based refractory alloys, Mo- and W-based refractory alloys, Mo- and Ta-based refractory alloys, W- and Ta-based refractory alloys, or other refractory alloys.

At least some additive manufacturing systems, fabricate components using a beam device (e.g., a laser or an electron beam) and a powder material, such as, without limitation, a powdered metal. The electron beam melts the powder material in and around the area where the electron beam is incident on the powder material, resulting in a melt pool. In some additive manufacturing systems, component quality may be impacted by excess heat and/or variation in heat being transferred to the metal powder by the electron beam within the melt pool. However, the present disclosure is not limited only to moving energy beam-based bonding and/or fusion systems (e.g., EBM systems), but also includes, for example, Selective Laser Melting (SLM), Direct Metal Laser Melting (DMLM), Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Laser Engineered Net Shaping (LENS), Laser Net Shape Manufacturing (LNSM), Direct Metal Deposition (DMD), Digital Light Processing (DLP), Direct Selective Laser Melting (DSLM), and other known processes. As such, it should be appreciated that while the present disclosure describes systems and methods related to EBM for the purposes of explanation, the systems and methods described herein can be used with other additive manufacturing modalities without departing from the scope of the present disclosure.

The present disclosure is related to a tool for generating a melt path for a beam (in embodiments, an electron beam or a laser beam) for a given slice of geometry of a surface (e.g., a surface layer of build material) to be melted with controlled thermal histories at every position inside the geometries, in order to achieve pre-defined material properties and avoid crack formations and other defects. In embodiments, the melt path for the beam may be determined by a melt strategy comprising a processing order of treatment actions, as will be described in further detail below.

When constructing an object via an additive manufacturing process, layers of build material (e.g., powdered metal) may be successively deposited and treated upon a build platform or upon a previously-treated layer of build material to iteratively build the object. Methods of additive manufacturing described herein include treating a deposited layer of build material using a beam (e.g., an electron beam) to melt (and, in some embodiments, pre-heat) the deposited layer, which may be cooled either via the environment of a build chamber of the deposited layer or by a cooling mechanism (e.g., a fan). In embodiments, treatment of a layer of build material includes a melting strategy including melt steps (e.g., application of an electron beam to the layer) and, in further embodiments, including pre-melt steps (e.g., heating by a treatment beam or other mechanism) to prepare the layer for melting and post-melt steps (e.g., cooling via a fan or other mechanism or re-heating by a treatment beam or other mechanism) to ensure that parts of or an entirety of the layer abide by a desired thermal profile. In embodiments, post-melting steps comprise increasing or decreasing cooling rates by providing a mechanism that cools or heats build material, e.g. to ensure a cooling rate of the build material abides by a desired thermal profile. In embodiments, post-melting steps comprise re-heating build material, e.g. to prepare the build material for subsequent melting steps.

As described herein, a "thermal profile" is the temperature (and/or other thermal qualities) of a region of build material (e.g., a portion of a layer or an entire layer) as a function of time. A "desired" thermal profile is thereby a thermal profile of the region which, prior to treatment, a melting strategy is intended or designed to impart to, e.g., ensure an intended structure of the region or to prevent the formation of defects in the region. A desired thermal profile may have upper and lower bounds, and thereby define, at any given point in time, a desired range within which a thermal quality (e.g., temperature) within which the build material of the relevant region is desired to be kept within to, e.g., prevent defects from forming during a melt process. An "actual" thermal profile is thereby a thermal profile of build material of a region that actually occurs, e.g., during a melt process of a layer comprising the region. Further, a "predicted" thermal profile is a thermal profile as modeled (by, e.g., a thermal model) based on certain discrete events. A predicted thermal profile may be used to predict, based on planned treatment actions upon a region (e.g., melting build material of the region with a beam), an actual thermal profile of the region before, during, and/or after such treatment actions to, e.g., select planned treatment actions which would impart an actual thermal profile which resides within the bounds of a desired thermal profile. Put simply, a melt strategy comprising a processing order of treatment actions may be considered and used to determine a predicted thermal profile, and, if the predicted thermal profile resides within bounds of a desired thermal profile, then the processing order of treatment actions may be acceptable; otherwise, the processing order of treatment actions may be unacceptable, as introducing a likelihood that an actual thermal profile will not reside within bounds of the desired thermal profile.

When manufacturing objects with complex geometries via additive manufacturing processes, especially single crystal parts, small regions of a surface layer may undergo treatment which imparts strict (e.g., with small margin of error and/or small difference between bounds) thermal profiles to, for example, achieve pre-defined material properties and to avoid crack formation and other defects by controlling the solidification process of the surface layer. However, imparting a strict thermal profile upon a layer may be difficult, as, even if the layer is abstracted to a lattice of lines defining points, each point having individual thermal profiles, other factors beyond just a heating and cooling time associated with the application of a treatment beam (e.g., an electron beam) must be considered when generating a melt strategy for the layer. For example, heating steps of a melting strategy will result in the heating of points at which a treatment beam has not been applied (due to, e.g., heat diffusion). As such, generating a melting strategy which imparts sufficiently strict thermal profiles so as to enable the creation of, e.g., a single crystal part having complex geometry or other complex additively manufactured objects may include addressing and accounting for all thermal effects (e.g., effects of the treatment beam, of other heating and/or cooling mechanisms, and of environmental heating and/or cooling) to ensure that the strict thermal profile is met.

In embodiments, a thermal profile is determined as a function of a temperature gradient, solidification velocity, and/or epitaxial growth of the surface layer or of the build material generally. In embodiments, a margin of error of a thermal profile is a difference between an upper temperature bound and a lower temperature bound of one or more melt points for a time value of the thermal profile. In embodiments, a margin of error of a thermal profile may vary depending on, for example, a composition of the build material, a type of treatment being performed, a size of a region associated with a point associated with the thermal profile, a type of object being produced, and/or other factors. In embodiments, a thermal profile may include a margin of error greater than or equal to 10⁻¹ K (Kelvin) and less than or equal to 10³ K. In embodiments, a thermal profile may include a margin of error of greater than or equal to 10⁻¹ K, greater than or equal to 1 K, greater than or equal to 10 K, greater than or equal to 150 K, greater than or equal to 500 K, or even greater than or equal to 10² K. In embodiments, a thermal profile may include a margin of error of less than or equal to 10³ K, less than or equal to 500 K, less than or equal to 150 K, less than or equal to 10² K, less than or equal to 10 K, or even less than or equal to 1 K. In embodiments, a thermal profile may include a margin of error of greater than or equal to 10⁻¹ K and less than or equal to 10³ K. In embodiments, a thermal profile may include a margin of error of greater than or equal to 10⁻¹ K and less than or equal to 500 K. In embodiments, a thermal profile may include a margin of error of greater than or equal to 10⁻¹ K and less than or equal to 150 K. In embodiments, a thermal profile may include a margin of error of greater than or equal to 10⁻¹ K and less than or equal to 10² K. In embodiments, a thermal profile may include a margin of error of greater than or equal to 10⁻¹ K and less than or equal to 10 K. In embodiments, a thermal profile may include a margin of error of greater than or equal to 10⁻¹ K and less than or equal to 1 K. In embodiments, a thermal profile may include a margin of error of greater than or equal to 1 K and less than or equal to 10³ K. In embodiments, a thermal profile may include a margin of error of greater than or equal to 1 K and less than or equal to 500 K. In embodiments, a thermal profile may include a margin of error of greater than or equal to 1 K and less than or equal to 150 K. In embodiments, a thermal profile may include a margin of error of greater than or equal to 1 K and less than or equal to 10² K. In embodiments, a thermal profile may include a margin of error of greater than or equal to 1 K and less than or equal to 10 K. In embodiments, a thermal profile may include a margin of error of greater than or equal to 10 K and less than or equal to 10³ K. In embodiments, a thermal profile may include a margin of error of greater than or equal to 10 K and less than or equal to 500 K. In embodiments, a thermal profile may include a margin of error of greater than or equal to 10 K and less than or equal to 150 K. In embodiments, a thermal profile may include a margin of error of greater than or equal to 10 K and less than or equal to 10² K. In embodiments, a thermal profile may include a margin of error of greater than or equal to 10² K and less than or equal to 10³ K. In embodiments, a thermal profile may include a margin of error of greater than or equal to 10² K and less than or equal to 500 K. In embodiments, a thermal profile may include a margin of error of greater than or equal to 10² K and less than or equal to 150 K. In embodiments, a thermal profile may include a margin of error of greater than or equal to 150 K and less than or equal to 10³ K. In embodiments, a thermal profile may include a margin of error of greater than or equal to 150 K and less than or equal to 500 K. In embodiments, a thermal profile may include a margin of error of greater than or equal to 500 K and less than or equal to 10³ K.

In embodiments, a margin of error may be associated with a temperature gradient. In embodiments, any, some, or all of the above-described margins of error may instead correspond to units of K/mm (Kelvin per millimeter). Accordingly, in embodiments, a thermal profile may include a margin of error greater than or equal to 10⁻¹ K/mm and less than or equal to 10³ K/mm. In embodiments, a thermal profile may include a margin of error of greater than or equal to 10⁻¹ K/mm, greater than or equal to 1 K/mm, greater than or equal to 10 K/mm, greater than or equal to 150 K/mm, greater than or equal to 500 K/mm, or even greater than or equal to 10² K/mm. In embodiments, a thermal profile may include a margin of error of less than or equal to 10³ K/mm, less than or equal to 500 K/mm, less than or equal to 150 K/mm, less than or equal to 10² K/mm, less than or equal to 10 K/mm, or even less than or equal to 1 K/mm. In embodiments, a thermal profile may include a margin of error of greater than or equal to 10⁻¹ K/mm and less than or equal to 10³ K/mm. In embodiments, a thermal profile may include a margin of error of greater than or equal to 10⁻¹ K/mm and less than or equal to 500 K/mm. In embodiments, a thermal profile may include a margin of error of greater than or equal to 10⁻¹ K/mm and less than or equal to 150 K/mm. In embodiments, a thermal profile may include a margin of error of greater than or equal to 10⁻¹ K/mm and less than or equal to 10² K/mm. In embodiments, a thermal profile may include a margin of error of greater than or equal to 10⁻¹ K/mm and less than or equal to 10 K/mm. In embodiments, a thermal profile may include a margin of error of greater than or equal to 10⁻¹ K/mm and less than or equal to 1 K/mm. In embodiments, a thermal profile may include a margin of error of greater than or equal to 1 K/mm and less than or equal to 10³ K/mm. In embodiments, a thermal profile may include a margin of error of greater than or equal to 1 K/mm and less than or equal to 500 K/mm. In embodiments, a thermal profile may include a margin of error of greater than or equal to 1 K/mm and less than or equal to 150 K/mm. In embodiments, a thermal profile may include a margin of error of greater than or equal to 1 K/mm and less than or equal to 10² K/mm. In embodiments, a thermal profile may include a margin of error of greater than or equal to 1 K/mm and less than or equal to 10 K/mm. In embodiments, a thermal profile may include a margin of error of greater than or equal to 10 K/mm and less than or equal to 10³ K/mm. In embodiments, a thermal profile may include a margin of error of greater than or equal to 10 K/mm and less than or equal to 500 K/mm. In embodiments, a thermal profile may include a margin of error of greater than or equal to 10 K/mm and less than or equal to 150 K/mm. In embodiments, a thermal profile may include a margin of error of greater than or equal to 10 K/mm and less than or equal to 10² K/mm. In embodiments, a thermal profile may include a margin of error of greater than or equal to 10² K/mm and less than or equal to 10³ K/mm. In embodiments, a thermal profile may include a margin of error of greater than or equal to 10² K/mm and less than or equal to 500 K/mm. In embodiments, a thermal profile may include a margin of error of greater than or equal to 10² K/mm and less than or equal to 150 K/mm. In embodiments, a thermal profile may include a margin of error of greater than or equal to 150 K/mm and less than or equal to 10³ K/mm. In embodiments, a thermal profile may include a margin of error of greater than or equal to 150 K/mm and less than or equal to 500 K/mm. In embodiments, a thermal profile may include a margin of error of greater than or equal to 500 K/mm and less than or equal to 10³ K/mm.

In embodiments, any, some, or all of the above-described margins of error may instead correspond to Kelvin per a unit of length other than millimeters (e.g., micrometers). In embodiments, any, some, or all of the above described margins of error may instead correspond to units of K/µm (Kelvin per micrometer). In embodiments, any, some, or all of the above-described margins of error may instead correspond to units of K/(10 mm) (Kelvin per 10 millimeters). In embodiments, any, some, or all of the above-described margins of error may instead correspond to units of K/(100 mm) (Kelvin per 100 millimeters). In embodiments, any, some, or all of the above-described margins of error may instead correspond to units of K/(250 mm) (Kelvin per 250 millimeters). In embodiments, any, some, or all of the above-described margins of error may instead correspond to units of K/(500 mm) (Kelvin per 500 millimeters). In embodiments, any, some, or all of the above-described margins of error may instead correspond to units of K/(750 mm) (Kelvin per 750 millimeters). In embodiments, any, some, or all of the above-described margins of error may instead correspond to units of K/m (Kelvin per meter).

In embodiments, a solidification velocity of a thermal profile is a rate of solidification of build material of one or more melt points for a time value of the thermal profile. In embodiments, a solidification velocity of a thermal profile may vary depending on, for example, a composition of the build material, a type of treatment being performed, a size of a region associated with a point associated with the thermal profile, a type of object being produced, treatment actions relating to the thermal profile, and/or other factors. In embodiments, a thermal profile may include a solidification velocity greater than or equal to 10⁻⁴ mm/s (i.e., millimeters per second) and less than or equal to 100 mm/s. In embodiments, a thermal profile may include a solidification velocity greater than or equal to 10⁻⁴ mm/s, greater than or equal to 10⁻³ mm/s, greater than or equal to 10⁻² mm/s, greater than or equal to 10⁻¹ mm/s, greater than or equal to 1 mm/s, greater than or equal to 30 mm/s, or even greater than or equal to 50 mm/s. In embodiments, a thermal profile may include a solidification velocity less than or equal to 100 mm/s, less than or equal to 50 mm/s, less than or equal to 30 mm/s, less than or equal to 1 mm/s, less than or equal to 10⁻¹ mm/s, less than or equal to 10⁻² mm/s, or even less than or equal to 10⁻³ mm/s. In embodiments, a thermal profile may include a solidification velocity greater than or equal to 10⁻⁴ mm/s and less than or equal to 100 mm/s. In embodiments, a thermal profile may include a solidification velocity greater than or equal to 10⁻⁴ mm/s and less than or equal to 50 mm/s. In embodiments, a thermal profile may include a solidification velocity greater than or equal to 10⁻⁴ mm/s and less than or equal to 30 mm/s. In embodiments, a thermal profile may include a solidification velocity greater than or equal to 10⁻⁴ mm/s and less than or equal to 1 mm/s. In embodiments, a thermal profile may include a solidification velocity greater than or equal to 10⁻⁴ mm/s and less than or equal to 10⁻¹ mm/s. In embodiments, a thermal profile may include a solidification velocity greater than or equal to 10⁻⁴ mm/s and less than or equal to 10⁻² mm/s. In embodiments, a thermal profile may include a solidification velocity greater than or equal to 10⁻⁴ mm/s and less than or equal to 10⁻³ mm/s. In embodiments, a thermal profile may include a solidification velocity greater than or equal to 10⁻³ mm/s and less than or equal to 100 mm/s. In embodiments, a thermal profile may include a solidification velocity greater than or equal to 10⁻³ mm/s and less than or equal to 50 mm/s. In embodiments, a thermal profile may include a solidification velocity greater than or equal to 10⁻³ mm/s and less than or equal to 30 mm/s. In embodiments, a thermal profile may include a solidification velocity greater than or equal to 10⁻³ mm/s and less than or equal to 1 mm/s. In embodiments, a thermal profile may include a solidification velocity greater than or equal to 10⁻³ mm/s and less than or equal to 10⁻¹ mm/s. In embodiments, a thermal profile may include a solidification velocity greater than or equal to 10⁻³ mm/s and less than or equal to 10⁻² mm/s. In embodiments, a thermal profile may include a solidification velocity greater than or equal to 10⁻² mm/s and less than or equal to 100 mm/s. In embodiments, a thermal profile may include a solidification velocity greater than or equal to 10⁻² mm/s and less than or equal to 50 mm/s. In embodiments, a thermal profile may include a solidification velocity greater than or equal to 10⁻² mm/s and less than or equal to 30 mm/s. In embodiments, a thermal profile may include a solidification velocity greater than or equal to 10⁻² mm/s and less than or equal to 1 mm/s. In embodiments, a thermal profile may include a solidification velocity greater than or equal to 10⁻² mm/s and less than or equal to 10⁻¹ mm/s. In embodiments, a thermal profile may include a solidification velocity greater than or equal to 10⁻² mm/s and less than or equal to 100 mm/s. In embodiments, a thermal profile may include a solidification velocity greater than or equal to 10⁻¹ mm/s and less than or equal to 50 mm/s. In embodiments, a thermal profile may include a solidification velocity greater than or equal to 10⁻¹ mm/s and less than or equal to 30 mm/s. In embodiments, a thermal profile may include a solidification velocity greater than or equal to 10⁻¹ mm/s and less than or equal to 1 mm/s. In embodiments, a thermal profile may include a solidification velocity greater than or equal to 1 mm/s and less than or equal to 100 mm/s. In embodiments, a thermal profile may include a solidification velocity greater than or equal to 1 mm/s and less than or equal to 50 mm/s. In embodiments, a thermal profile may include a solidification velocity greater than or equal to 1 mm/s and less than or equal to 30 mm/s. In embodiments, a thermal profile may include a solidification velocity greater than or equal to 30 mm/s and less than or equal to 100 mm/s. In embodiments, a thermal profile may include a solidification velocity greater than or equal to 30 mm/s and less than or equal to 50 mm/s. In embodiments, a thermal profile may include a solidification velocity greater than or equal to 50 mm/s and less than or equal to 100 mm/s.

The present disclosure relates to systems, methods, and computer readable mediums that can generate a thermally adaptive point-based melting strategy for beam-based additive manufacturing processes. Using the systems, methods, and computer readable mediums described herein, a melting strategy can be generated and executed that provides for the controlled solidification of a surface layer, including in contexts of EBM additive manufacturing processes and/or the controlled solidification of single crystal formations during processing of nickel- and/or cobalt-based superalloys.

In general, a beam-based additive manufacturing process begins with a deposition nozzle or other deposition device of an additive manufacturing system spreading a thin layer of metal powder on a build platform. Next, a treatment beam and, in embodiments, other treatment mechanisms (e.g., additional beams, fans, infrared heating, electric induction, or other heating/cooling mechanisms) are applied to the layer in accordance with a generated melt strategy to melt and solidify the powder. Next the additive manufacturing system builds objects, such as, for example, a part, in a layer-by-layer manner by melting or sintering a powder material using treatment beams such as, for example, an electron beam or a laser beam. The powder to be melted by the treatment beam is supplied by a reservoir and is spread evenly over the build platform by a deposition nozzle or other deposition device. In embodiments, a plurality of treatment beams may be used to build different sections of the object being built. The treatment beams sinter or melt a cross sectional layer of the object being built. The build platform is then lowered and another layer of powder is spread over the build platform and the object being built, followed by successive melting/sintering of the powder by the treatment beam. The process is repeated until the object is completely built from the treated powder material.

The treatment beam(s) may be controlled by a computer system including a processor and a memory. The computer system, as described in further detail below, determines a melting strategy for each layer and controls the treatment beams (and, in some embodiments, other treatment mechanisms) to treat the powder material according to the melt strategy. Each of the treatment beams (and/or, in some embodiments, other treatment mechanisms such as a heating source and/or a cooling source) may operate on a different portion of the build platform and may be used to build different sections of the object. As the object is built one layer at a time, the thermal gradient and/or the strain on the object may cause the object to have various distortions, including, e.g., pores in the object or cracks in the object. Accordingly, it may be desirable to generate a melt strategy that reduces distortions such that the additive manufacturing system may produce, e.g., a single crystal part having complex geometry or other complex additively manufactured object.

In order for the object to be built in a plurality of sections using the treatment beams, there may be a plurality of treatment beams that are calibrated with respect to each other. That is, strikes from the treatment beams may occur at predetermined locations on the build platform according to a broader melting strategy incorporating treatment of the layer by a plurality of treatment beams.

In embodiments disclosed herein, a thermal model may be used to predict a predicted thermal profile of the layer and/or of regions of the layer as a function of time, such that a generated melting strategy, using predicted thermal profiles, may be designed such that an actual thermal profile of the layer (e.g., thermodynamic qualities of the layer during treatment of the layer) remains within bounds of a desired thermal profile. The thermal model may describe the state and temperature of the surface according to a time value, using, as inputs, steps of a melting strategy (e.g., a pre-melting step, a melting step, or a post-melting step). The thermal model may utilize geometry data to analogize the layer as a lattice of lines defining points, and provide thermal profiles of the layer on a point-by-point basis. A melting strategy may similarly use such geometry data, determining treatment steps on a point-by-point basis. As such, generating a melting strategy comprising pre-melting, melting, and/or post-melting steps for each point of a geometry data may include successively generating an order for such steps based on changing thermal profiles resulting from the previous step or steps, as calculated by the thermal model.

As described herein, the phrase "thermal model" includes any modeling mechanism (e.g., modeling software, a modeling algorithm, or other mechanism for determining a thermal profile). However, for the purposes of embodiments described herein, any mechanism which may predict thermal profiles of regions and/or and entirety of a powder bed and/or of a surface layer of a powder bed may be used as a thermal model. Embodiments merely use predicted thermal profiles of regions and/or an entirety of a powder bed and/or of a surface layer of a powder bed, and embodiments may be agnostic to the method, mechanism, or tool used to creates such thermal profiles. In embodiments, predicted thermal profiles include predicted thermal characteristics associated with time values and associated with one or more predetermined points (e.g., coordinates corresponding to a defined region of space) of geometry data.

In embodiments, a thermal model comprises heuristic constraints on time difference and distance between processed points. In embodiments, a thermal model comprises finite element models of substrate and build environment temperature. In embodiments, a thermal model comprises a computational fluid dynamics model of melt pool behavior. In embodiments, a thermal model comprises a microstructure formation model. In embodiments, a thermal model comprises a machine learning model. In embodiments, a thermal model comprises a machine learning model that couples heat exposure to temperature. In embodiments, a thermal model comprises a machine learning model that couples heat exposure to microstructure response. In embodiments, a thermal model comprises a machine learning model that couples heat exposure to temperature and microstructure response. In embodiments, a thermal model comprises a neural network model. In embodiments, a thermal model comprises a neural network model that couples heat exposure to temperature. In embodiments, a thermal model comprises a neural network model that couples heat exposure to microstructure response. In embodiments, a thermal model comprises a neural network model that couples heat exposure to temperature and microstructure response.

In embodiments, thermal characteristics may include any, some, or all of: a temperature range of a point of a geometry data (e.g., a range of temperatures at which a build material melts or is desired to have a temperature within for melting); an area temperature range of at least some points of a geometry data (e.g., a temperature range of neighboring points to account for heat diffusion by the neighboring points or by a treated point after treating); a temperature history over a time interval; a material state (e.g., a material state of build material associated with a point); a material phase (e.g., a material phase of build material associated with a point); a time value associated with a predicted temperature (as predicted by, e.g., a thermal model); a time value associated with a predicted temperature range (as predicted by, e.g., a thermal model); a time value associated with a predicted material state (as predicted by, e.g., a thermal model); a time value associated with a predicted material phase (as predicted by, e.g., a thermal model); or a combination thereof.

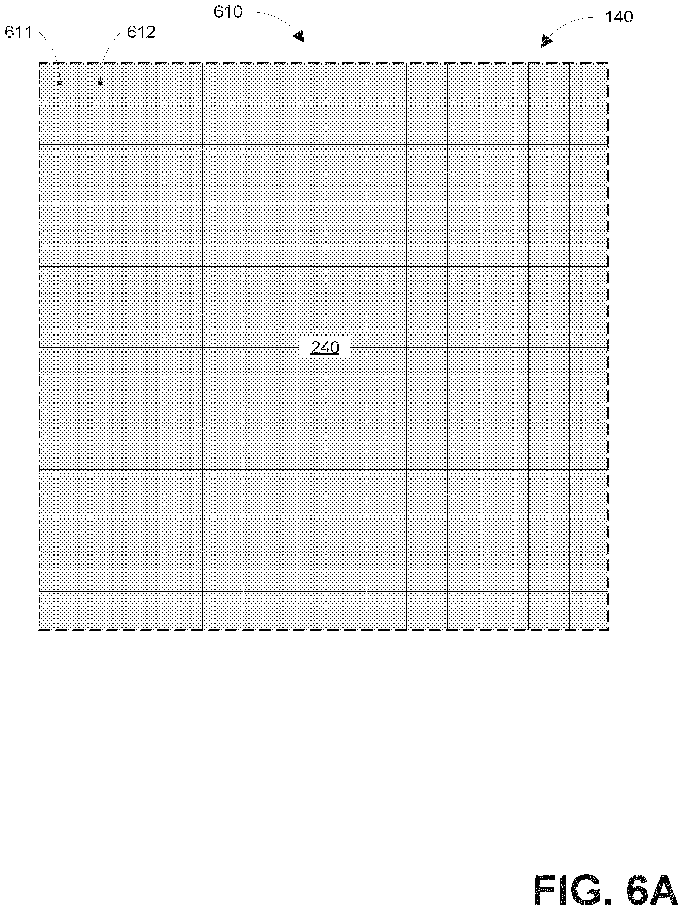

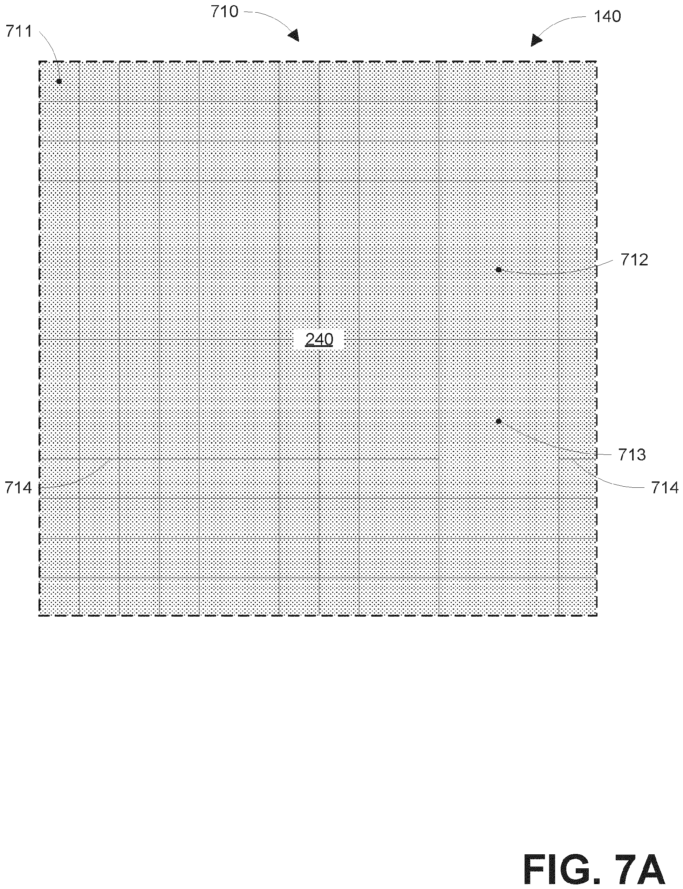

Geometry data may be generated by a geometry model, which may use generated or actual images of a layer, a build platform, or otherwise of a part undergoing additive manufacturing to create an analogized image (e.g., the geometry data) of a surface layer of the object undergoing manufacturing or of the build platform and to populate the analogized image with points. As described in further detail below with reference to FIGS. 6A-6B, in embodiments, the points are simply defined by a lattice of straight lines. In other embodiments, the lines may be adaptively spaced, such that neighboring parallel lines defining the points do not have, throughout the lattice of lines, equal distance between each other. In further such embodiments, and as described in further detail below with reference to FIGS. 7A-7B, the points may be defined by adaptively spaced lines, adaptively spaced lines or curves filling out regions of the geometry data, fixed patterns with adaptive spacing, or a combination thereof. In embodiments, geometry data generated is a three-dimensional representation of a surface of an object. In embodiments, geometry data generated is a three-dimensional representation of a powder layer of build material.

The systems and methods as described herein facilitate the generation of melting strategies, including, in some embodiments, thermally adaptive point-based melting strategies for, e.g., EBM processes and which may provide for the additive manufacturing of, e.g., single crystal parts with complex geometries or other complex additively manufactured objects. Specifically, in one embodiment, the systems and methods described herein include receiving geometry data corresponding to a surface of a powder layer within a build chamber of an electron beam additive manufacturing system, populating the geometry data with a plurality of points comprising a plurality of melting points, assigning at least one treatment action to each melting point of the plurality melting points, assigning at least one melt parameter and at least one prerequisite thermal characteristic to each treatment action of each melting point, generating a preliminary processing list comprising each treatment action of each melting point, creating a revised processing order comprising a plurality of sequential unpopulated items, wherein each unpopulated item of the revised processing order is associated with a sequential time value, populating the revised processing order, the populating comprising: identifying an earliest unpopulated item of the revised processing order, determining if any treatment action of the treatment actions of the preliminary processing list comprises prerequisite thermal characteristics which are satisfied for the sequential time value of the earliest unpopulated item, assigning an assignment to the earliest unpopulated item, wherein the assignment comprises: a wait period, or the treatment action comprising prerequisite thermal characteristics which are satisfied for the sequential time value of the earliest unpopulated item, if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list, classifying the earliest unpopulated item as a populated item, and if the preliminary processing list comprises treatment actions, returning to identifying the earliest unpopulated item, or, if the preliminary processing list does not comprise treatment actions, issuing a command to begin a melt process.

Some embodiments involve the use of one or more electronic or computing devices. Such devices typically include a processor or controller, such as a general-purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary, and thus are not intended to limit in any way the definition and/or meaning of the term processor.

All systems and processes discussed herein may be embodied in program code stored on one or more non-transitory computer-readable media. Such media may include, for example, a floppy disk, a CD-ROM, a DVD-ROM, a Flash drive, magnetic tape, and solid-state Random Access Memory (RAM) or Read-Only Memory (ROM) storage units. Embodiments are therefore not limited to any specific combination of hardware and software.

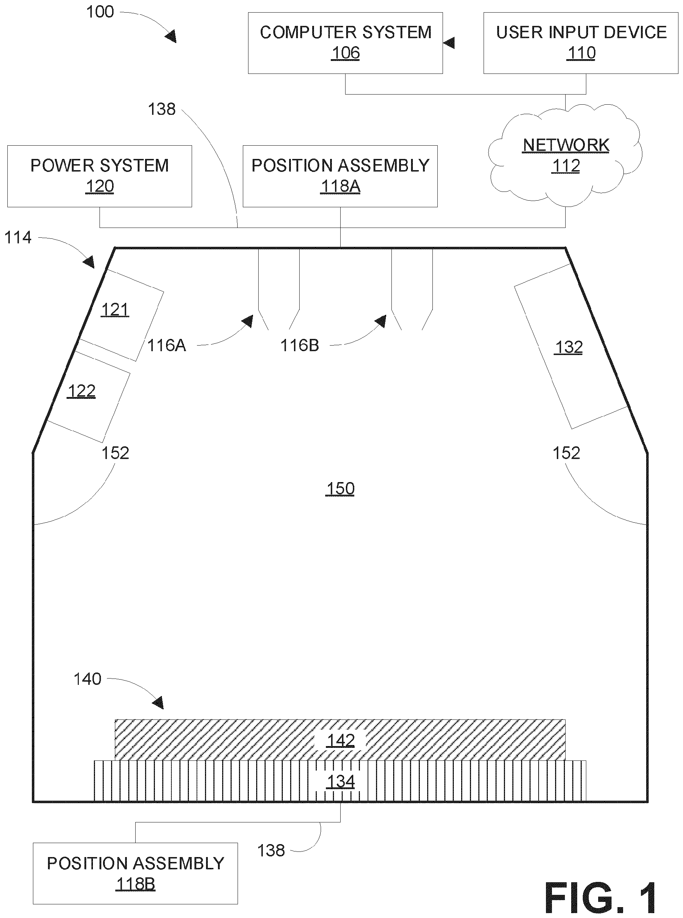

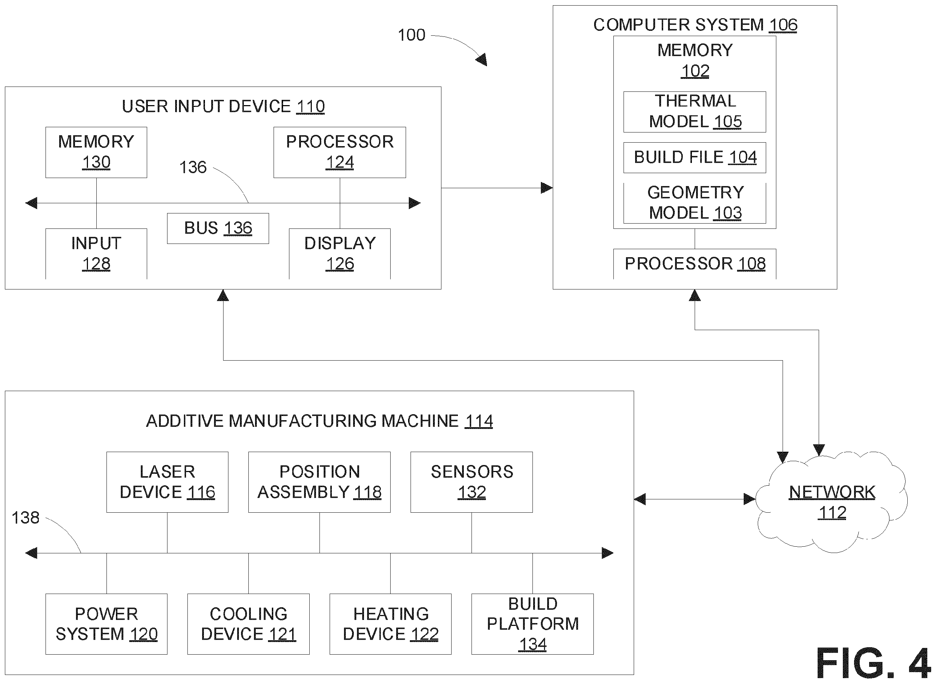

FIG. 1 is a schematic view of an exemplary additive manufacturing system 100 for performing additive manufacturing. The additive manufacturing system 100 includes an additive manufacturing machine 114. In one embodiment, the additive manufacturing machine 114 can be connected to a network 112 which, as is described in further detail below with reference to FIG. 4, includes or is otherwise communicatively coupled to a user input device 110 and a computer system 106, enabling the user input device 110, the computer system 106, and the additive manufacturing machine 114 to be communicatively coupled to one another via the network 112. In another embodiment, all of these components can be included in one device and nothing in this disclosure should be seen as limiting the various configurations available. The computer system 106 may include, for example, a geometry model 103 which may generate geometry data of, e.g., a layer, a 3D model of component in a build file 104 to be fabricated by the additive manufacturing system 100, and/or a thermal model 105 which may generate thermal profiles of, e.g., a layer. Executable instructions executed by a processor 108 may include controlling the power output of beam devices 116A, 116B, and controlling the position assembly 118A, which controls positions of the beam devices 116A, 116B, and position assembly 118B, which controls a position of a build platform 134.

The build platform 134 is a surface upon which a powder bed 142 of a partially manufactured object 140 is successively laid, in layers of build material comprising, e.g., a powdered metal, to produce an additively manufactured object. The additively manufactured object is produced in a build chamber 150 defined by chamber walls 152 of the additive manufacturing machine 114. As layers of build material are deposited upon, initially, the build platform 134 and, subsequently, upon the powder bed 142, the position assembly 118B may move the build platform 134 (e.g., to raise or lower the build platform 134 (and, thereby, the partially manufactured object 140) relative to the beam devices 116A, 116B).

In embodiments, either or both of the beam devices 116A, 116B include an electron beam accelerator (not shown) or other device capable of forming an electron beam. In other embodiments, either or both of the beam devices 116A, 116B include a laser. In some embodiments, the additive manufacturing machine 114 only includes a single beam device. In embodiments, the additive manufacturing machine 114 includes two beam devices. In embodiments the additive manufacturing machine 114 includes three or more beam devices. In some embodiments, the additive manufacturing machine 114 includes only one of the position assemblies 118A, 118B.

Components of the additive manufacturing system 100 are all connected via the network 112 and can further include the position assemblies 118A, 118B, a power system 120, a cooling source 121, a heating source 122, and sensors 132. In embodiments, either or both of the heating source 122 and the cooling source 121 are positioned above the build platform 134. In other embodiments, either or both of the heating source 122 and the cooling source 121 are positioned below the build platform 134. In embodiments, the heating source 122 can include a heat lamp, heating plates, a device that radiates energy (e.g., infrared waves) to heat build material, a device that inductively heats material, or another mechanism for heating build material. In embodiments, the cooling source 121 can include a fan, cooling plates, or another mechanism for cooling build material. Components of the additive manufacturing system 100 can communicate through a bus 138 and are connected to the user input device 110 and computer system 106 through a network 112.

In embodiments, the additive manufacturing system 100 is configured to fabricate components including medical components, tools, and steel components. In one embodiment, the additive manufacturing system 100 is configured to fabricate aircraft components, such as nozzles and the like. Materials suitable for forming such components, including, without limitation, gas atomized alloys of cobalt, iron, aluminum, titanium, nickel, and combinations thereof. In other embodiments, build material of the partially manufactured object 140 may include any suitable type of powdered metal material. In yet other embodiments, build material of the partially manufactured object 140 may include any suitable build material that enables the additive manufacturing system 100 to function as described, including, for example and without limitation, ceramic powders, metal-coated ceramic powders, and thermoset or thermoplastic resins.

Beam devices 116A, 116B are configured to generate a beam (e.g., an electron beam or a laser beam) of sufficient energy to at least partially melt the build material of the powder bed 142. In one embodiment, beam devices 116A, 116B emit an electron beam. In another embodiment, beam devices 116A, 116B are yttrium-based solid state lasers configured to emit a laser beam having a wavelength of about 1070 nanometers (nm). In other embodiments, beam devices 116A, 116B may include any suitable type of beam-forming device that enables the additive manufacturing system 100 to function as described herein. In one embodiment, for example, the additive manufacturing system 100 may include a first beam-forming device having a first power and a second beam-forming device having a second power different from the first beam power, or at least two beam-forming devices having substantially the same power output. In yet other embodiments, the additive manufacturing system 100 may include any combination of beam-forming devices that enable the additive manufacturing system 100 to function as described herein. As shown in FIG. 1, the additive manufacturing machine 114 can direct beams from beam devices 116A, 116B across selective portions of the powder bed 142 to create a solid component forming the partially manufactured object 140.

Beams of the beam devices 116A, 116B are directed onto a surface layer of the powder bed 142 according to a melting strategy determined by the computer system 106. In embodiments, to determine a melting strategy, the computer system 106 must first generate geometry data. To generate geometry data, the computer system 106 first receives image data of the partially manufactured object 140. Image data of the partially manufactured object 140 may be generated by equipment positioned within or near the build chamber 150, such as the sensors 132 or a camera (not shown). The geometry model 103 may then generate geometry data corresponding to a surface of the partially manufactured object 140 within the build chamber 150 of the additive manufacturing system 100. The computer system 106 (using, e.g., the geometry model 103) may then populate the geometry data with a plurality of points comprising a plurality of melting points. In embodiments, the points populating the geometry data may be close together. In embodiments, each point corresponds to a region defined by lines (or, in some embodiments, curves). In embodiments, a point may be a specific coordinate, but nonetheless correspond to a region of space (e.g., a region of the surface layer 240 as defined by lines and/or curves of the geometry data), as is described in further detail below.

In embodiments, regions of space corresponding to points may vary in size, by, e.g., varying a distance between points populating the geometry data. In embodiments, distances between points populating the geometry data (and, therefore, in embodiments, sizes of the regions of space corresponding to the points) may vary within the geometry data, with treatment of different layers of the partially manufactured object 140, and/or with manufacturing of different objects. In embodiments, distances between points populating the geometry data may vary due, e.g., to a composition of build material of the partially manufactured object 140, a location of points within the geometry data (for example, in embodiments, sizes of regions associated with points near an external edge of the partially manufactured object 140 may be smaller than sizes of regions associated with points within an interior of the partially manufactured object 140, as such points near the external edge may be more densely packed than points within the interior), desired qualities of the partially manufactured object 140, desired time thresholds for manufacturing the partially manufactured object 140, and/or other factors.

In embodiments, a distance between points populating the geometry data may be greater than or equal to 1 µm (i.e., micrometers) and less than or equal to 1 m (i.e., meters). In embodiments, a distance between points populating the geometry data may be greater than or equal to 1 µm, greater than or equal to 10 µm, greater than or equal to 100 µm, greater than or equal to 1 mm (i.e., millimeters), greater than or equal to 10 mm, greater than or equal to 100 mm, greater than or equal to 250 mm, greater than or equal to 500 mm, or even greater than or equal to 750 mm. In embodiments, a distance between points populating the geometry data may be less than or equal to 1 m, less than or equal to 750 mm, less than or equal to 500 mm, less than or equal to 250 mm, less than or equal to 100 mm, less than or equal to 10 mm, less than or equal to 1 mm, less than or equal to 100 µm, or even less than or equal to 10 µm. In embodiments, a distance between points populating the geometry data may be greater than or equal to 1 µm and less than or equal to 1 m. In embodiments, a distance between points populating the geometry data may be greater than or equal to 1 µm and less than or equal to 750 mm. In embodiments, a distance between points populating the geometry data may be greater than or equal to 1 µm and less than or equal to 500 mm. In embodiments, a distance between points populating the geometry data may be greater than or equal to 1 µm and less than or equal to 250 mm. In embodiments, a distance between points populating the geometry data may be greater than or equal to 1 µm and less than or equal to 100 mm. In embodiments, a distance between points populating the geometry data may be greater than or equal to 1 µm and less than or equal to 10 mm. In embodiments, a distance between points populating the geometry data may be greater than or equal to 1 µm and less than or equal to 1 mm. In embodiments, a distance between points populating the geometry data may be greater than or equal to 1 µm and less than or equal to 100 µm. In embodiments, a distance between points populating the geometry data may be greater than or equal to 1 µm and less than or equal to 10 µm. In embodiments, a distance between points populating the geometry data may be greater than or equal to 10 µm and less than or equal to 1 m. In embodiments, a distance between points populating the geometry data may be greater than or equal to 10 µm and less than or equal to 750 mm. In embodiments, a distance between points populating the geometry data may be greater than or equal to 10 µm and less than or equal to 500 mm. In embodiments, a distance between points populating the geometry data may be greater than or equal to 10 µm and less than or equal to 250 mm. In embodiments, a distance between points populating the geometry data may be greater than or equal to 10 µm and less than or equal to 100 mm. In embodiments, a distance between points populating the geometry data may be greater than or equal to 10 µm and less than or equal to 10 mm. In embodiments, a distance between points populating the geometry data may be greater than or equal to 10 µm and less than or equal to 1 mm. In embodiments, a distance between points populating the geometry data may be greater than or equal to 10 µm and less than or equal to 100 µm. In embodiments, a distance between points populating the geometry data may be greater than or equal to 100 µm and less than or equal to 1 m. In embodiments, a distance between points populating the geometry data may be greater than or equal to 100 µm and less than or equal to 750 mm. In embodiments, a distance between points populating the geometry data may be greater than or equal to 100 µm and less than or equal to 500 mm. In embodiments, a distance between points populating the geometry data may be greater than or equal to 100 µm and less than or equal to 250 mm. In embodiments, a distance between points populating the geometry data may be greater than or equal to 100 µm and less than or equal to 100 mm. In embodiments, a distance between points populating the geometry data may be greater than or equal to 100 µm and less than or equal to 10 mm. In embodiments, a distance between points populating the geometry data may be greater than or equal to 100 µm and less than or equal to 1 mm. In embodiments, a distance between points populating the geometry data may be greater than or equal to 1 mm and less than or equal to 1 m. In embodiments, a distance between points populating the geometry data may be greater than or equal to 1 mm and less than or equal to 750 mm. In embodiments, a distance between points populating the geometry data may be greater than or equal to 1 mm and less than or equal to 500 mm. In embodiments, a distance between points populating the geometry data may be greater than or equal to 1 mm and less than or equal to 250 mm. In embodiments, a distance between points populating the geometry data may be greater than or equal to 1 mm and less than or equal to 100 mm. In embodiments, a distance between points populating the geometry data may be greater than or equal to 1 mm and less than or equal to 10 mm. In embodiments, a distance between points populating the geometry data may be greater than or equal to 10 mm and less than or equal to 1 m. In embodiments, a distance between points populating the geometry data may be greater than or equal to 10 mm and less than or equal to 750 mm. In embodiments, a distance between points populating the geometry data may be greater than or equal to 10 mm and less than or equal to 500 mm. In embodiments, a distance between points populating the geometry data may be greater than or equal to 10 mm and less than or equal to 250 mm. In embodiments, a distance between points populating the geometry data may be greater than or equal to 10 mm and less than or equal to 100 mm. In embodiments, a distance between points populating the geometry data may be greater than or equal to 100 mm and less than or equal to 1 m. In embodiments, a distance between points populating the geometry data may be greater than or equal to 100 mm and less than or equal to 750 mm. In embodiments, a distance between points populating the geometry data may be greater than or equal to 100 mm and less than or equal to 500 mm. In embodiments, a distance between points populating the geometry data may be greater than or equal to 100 mm and less than or equal to 250 mm. In embodiments, a distance between points populating the geometry data may be greater than or equal to 250 mm and less than or equal to 1 m. In embodiments, a distance between points populating the geometry data may be greater than or equal to 250 mm and less than or equal to 750 mm. In embodiments, a distance between points populating the geometry data may be greater than or equal to 250 mm and less than or equal to 500 mm. In embodiments, a distance between points populating the geometry data may be greater than or equal to 500 mm and less than or equal to 1 m. In embodiments, a distance between points populating the geometry data may be greater than or equal to 500 mm and less than or equal to 750 mm. In embodiments, a distance between points populating the geometry data may be greater than or equal to 750 mm and less than or equal to 1 m.

In embodiments, a region represented by any, some, or all of the points populating the geometry data may be greater than or equal to 1 µm² and less than or equal to 1 m². In embodiments, a region represented by any, some, or all of the points populating the geometry data may be greater than or equal to 1 µm², greater than or equal to 10 µm², greater than or equal to 100 µm², greater than or equal to 1 mm², greater than or equal to 10 mm², greater than or equal to 100 mm², greater than or equal to 250 mm², greater than or equal to 500 mm², or even greater than or equal to 750 mm². In embodiments, a region represented by any, some, or all of the points populating the geometry data may be less than or equal to 1 m², less than or equal to 750 mm², less than or equal to 500 mm², less than or equal to 250 mm², less than or equal to 100 mm², less than or equal to 10 mm², less than or equal to 1 mm², less than or equal to 100 µm², or even less than or equal to 10 µm². In embodiments, a region represented by any, some, or all of the points populating the geometry data may be greater than or equal to 1 µm² and less than or equal to 1 m². In embodiments, a region represented by any, some, or all of the points populating the geometry data may be greater than or equal to 1 µm² and less than or equal to 750 mm². In embodiments, a region represented by any, some, or all of the points populating the geometry data may be greater than or equal to 1 µm² and less than or equal to 500 mm². In embodiments, a region represented by any, some, or all of the points populating the geometry data may be greater than or equal to 1 µm² and less than or equal to 250 mm². In embodiments, a region represented by any, some, or all of the points populating the geometry data may be greater than or equal to 1 µm² and less than or equal to 100 mm². In embodiments, a region represented by any, some, or all of the points populating the geometry data may be greater than or equal to 1 µm² and less than or equal to 10 mm². In embodiments, a region represented by any, some, or all of the points populating the geometry data may be greater than or equal to 1 µm² and less than or equal to 1 mm². In embodiments, a region represented by any, some, or all of the points populating the geometry data may be greater than or equal to 1 µm² and less than or equal to 100 µm². In embodiments, a region represented by any, some, or all of the points populating the geometry data may be greater than or equal to 1 µm² and less than or equal to 10 µm². In embodiments, a region represented by any, some, or all of the points populating the geometry data may be greater than or equal to 10 µm² and less than or equal to 1 m². In embodiments, a region represented by any, some, or all of the points populating the geometry data may be greater than or equal to 10 µm² and less than or equal to 750 mm². In embodiments, a region represented by any, some, or all of the points populating the geometry data may be greater than or equal to 10 µm² and less than or equal to 500 mm². In embodiments, a region represented by any, some, or all of the points populating the geometry data may be greater than or equal to 10 µm² and less than or equal to 250 mm². In embodiments, a region represented by any, some, or all of the points populating the geometry data may be greater than or equal to 10 µm² and less than or equal to 100 mm². In embodiments, a region represented by any, some, or all of the points populating the geometry data may be greater than or equal to 10 µm² and less than or equal to 10 mm². In embodiments, a region represented by any, some, or all of the points populating the geometry data may be greater than or equal to 10 µm² and less than or equal to 1 mm². In embodiments, a region represented by any, some, or all of the points populating the geometry data may be greater than or equal to 10 µm² and less than or equal to 100 µm². In embodiments, a region represented by any, some, or all of the points populating the geometry data may be greater than or equal to 100 µm² and less than or equal to 1 m². In embodiments, a region represented by any, some, or all of the points populating the geometry data may be greater than or equal to 100 µm² and less than or equal to 750 mm². In embodiments, a region represented by any, some, or all of the points populating the geometry data may be greater than or equal to 100 µm² and less than or equal to 500 mm². In embodiments, a region represented by any, some, or all of the points populating the geometry data may be greater than or equal to 100 µm² and less than or equal to 250 mm². In embodiments, a region represented by any, some, or all of the points populating the geometry data may be greater than or equal to 100 µm² and less than or equal to 100 mm². In embodiments, a region represented by any, some, or all of the points populating the geometry data may be greater than or equal to 100 µm² and less than or equal to 10 mm². In embodiments, a region represented by any, some, or all of the points populating the geometry data may be greater than or equal to 100 µm² and less than or equal to 1 mm². In embodiments, a region represented by any, some, or all of the points populating the geometry data may be greater than or equal to 1 mm² and less than or equal to 1 m². In embodiments, a region represented by any, some, or all of the points populating the geometry data may be greater than or equal to 1 mm² and less than or equal to 750 mm². In embodiments, a region represented by any, some, or all of the points populating the geometry data may be greater than or equal to 1 mm² and less than or equal to 500 mm². In embodiments, a region represented by any, some, or all of the points populating the geometry data may be greater than or equal to 1 mm² and less than or equal to 250 mm². In embodiments, a region represented by any, some, or all of the points populating the geometry data may be greater than or equal to 1 mm² and less than or equal to 100 mm². In embodiments, a region represented by any, some, or all of the points populating the geometry data may be greater than or equal to 1 mm² and less than or equal to 10 mm². In embodiments, a region represented by any, some, or all of the points populating the geometry data may be greater than or equal to 10 mm² and less than or equal to 1 m². In embodiments, a region represented by any, some, or all of the points populating the geometry data may be greater than or equal to 10 mm² and less than or equal to 750 mm². In embodiments, a region represented by any, some, or all of the points populating the geometry data may be greater than or equal to 10 mm² and less than or equal to 500 mm². In embodiments, a region represented by any, some, or all of the points populating the geometry data may be greater than or equal to 10 mm² and less than or equal to 250 mm². In embodiments, a region represented by any, some, or all of the points populating the geometry data may be greater than or equal to 10 mm² and less than or equal to 100 mm². In embodiments, a region represented by any, some, or all of the points populating the geometry data may be greater than or equal to 100 mm² and less than or equal to 1 m². In embodiments, a region represented by any, some, or all of the points populating the geometry data may be greater than or equal to 100 mm² and less than or equal to 750 mm². In embodiments, a region represented by any, some, or all of the points populating the geometry data may be greater than or equal to 100 mm² and less than or equal to 500 mm². In embodiments, a region represented by any, some, or all of the points populating the geometry data may be greater than or equal to 100 mm² and less than or equal to 250 mm². In embodiments, a region represented by any, some, or all of the points populating the geometry data may be greater than or equal to 250 mm² and less than or equal to 1 m². In embodiments, a region represented by any, some, or all of the points populating the geometry data may be greater than or equal to 250 mm² and less than or equal to 750 mm². In embodiments, a region represented by any, some, or all of the points populating the geometry data may be greater than or equal to 250 mm² and less than or equal to 500 mm². In embodiments, a region represented by any, some, or all of the points populating the geometry data may be greater than or equal to 500 mm² and less than or equal to 1 m². In embodiments, a region represented by any, some, or all of the points populating the geometry data may be greater than or equal to 500 mm² and less than or equal to 750 mm². In embodiments, a region represented by any, some, or all of the points populating the geometry data may be greater than or equal to 750 mm² and less than or equal to 1 m².

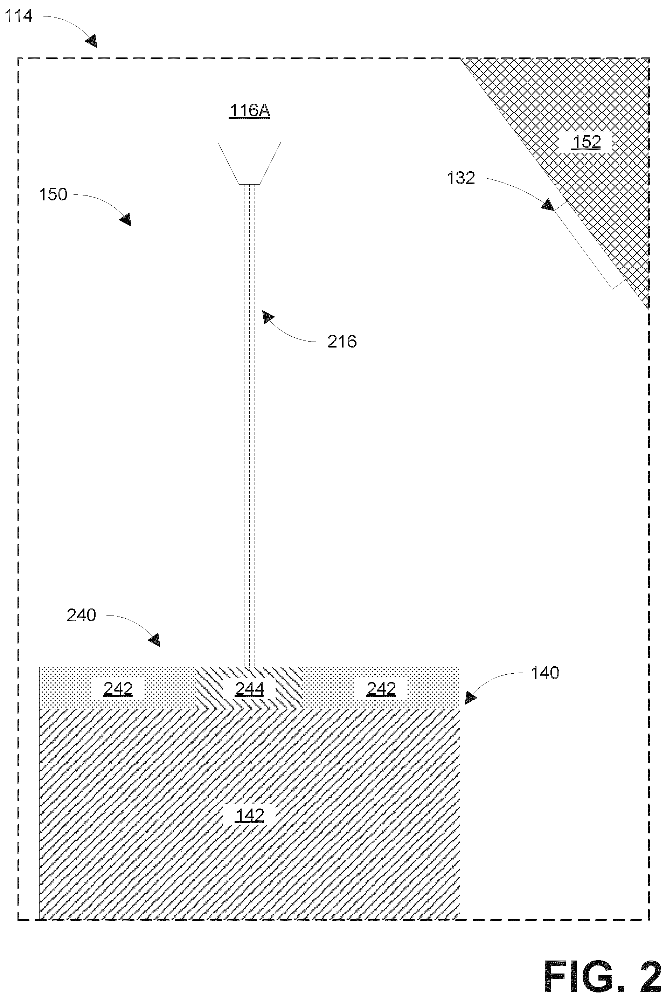

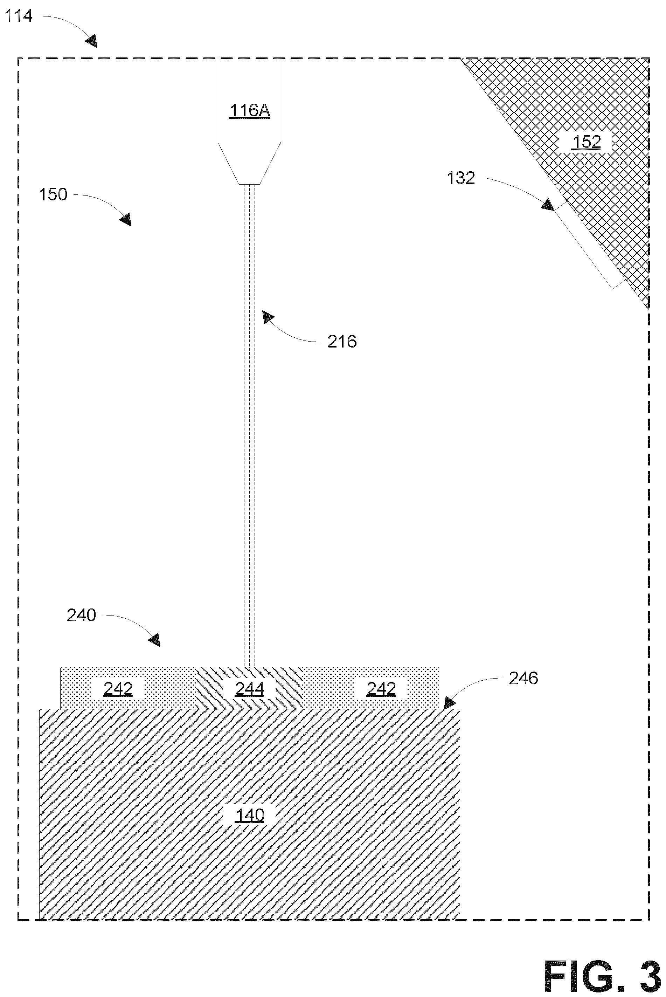

"Melting points," as described herein, refer to at least a subset of points generated in geometry data corresponding to regions of a surface of the partially manufactured object 140 (e.g., a surface layer) which must be treated prior to the deposition of a subsequent layer of build material. Referring to FIG. 2, melting points may include every point of the geometry data corresponding to a surface layer 240 of the powder bed 142. The surface layer 240 is untreated build material, which must be treated prior to the deposition of a subsequent layer of build material. In the embodiment of FIG. 2, the surface layer 240 of the powder bed 142 covers the entirety of the powder bed 142, and so every point of the geometry data would be a melting point. However, referring now to FIG. 3, in an alternative embodiment, the surface layer 240 may instead, as in the embodiment of FIG. 3, not span the entirety of the powder bed 142. In such cases, the melting points would only include points of the geometry data corresponding to the surface layer 240 and not include points of the geometry data instead corresponding to lower layers of the powder bed 142, such as a lower treated layer 246. The lower treated layer 246 includes a layer of build material deposited and treated prior to the deposition of the surface layer 240, and so, while the lower treated layer 246 may be exposed (e.g., not covered by a subsequent layer of build material), the lower treated layer 246 has nonetheless already received treatment and, as such, does not include melting points.

Referring again to FIG. 2, treatment of the surface layer 240 includes application of a beam 216 of, in the embodiment of FIG. 2, the beam device 116A to the surface layer 240. In embodiments, the beam 216 is an electron beam. In embodiments, the beam 216 is a laser beam. The beam 216 heats the surface layer 240 such that build material of the surface layer 240 may melt and solidify in a desired shape. As described above, treatment may further include pre-melting steps (e.g., preheating of the surface layer 240 by the beam devices 116A, 116B or by the heating source 122) and post-melting steps (e.g., affecting or altering a rate of cooling of the surface layer 240 by the cooling source 121, the heating source 122, one or both of the beam devices 116A, 116B, or by environmental effects or re-heating of the surface layer 240 by one or both of the beam devices 116A, 116B or by the heating source 122). However, the entirety of the surface layer 240 is not treated simultaneously; rather, at any given point in time, a treatment region 244 is being treated (e.g., by the beam 216), while an untreated region 242 is not being treated. However, treatment of the treatment region 244 may nonetheless have effects on nearby areas of the untreated region 242 (e.g., due to heat diffusion). Further, and as described above, the surface layer 240 may have a strict desired thermal profile, and different areas of the surface layer 240 may have different desired thermal profiles. As such, to generate a melt strategy that causes an actual thermal profile of the surface layer 240 during treatment to be within bounds of a desired thermal profile of the surface layer 240, the computer system 106 may associate a desired thermal profile with each melting point of the geometry data. By associating a desired thermal profile with each melting point of the geometry data, the computer system 106 can, using the thermal model 105, model thermal characteristics of each melting point as the computer system 106 iteratively generates successive (in time) treatment steps of the melt strategy such that perquisite thermal characteristics of the thermal profile of each melting point are not violated due to effects of such successive treatment steps.

Referring to FIG. 4, the computer system 106 may include at least one processor 108 that carries out executable instructions to operate the additive manufacturing system 100. The computer system 106 may include, for example, a calibration model within a memory component 102 and the build file 104 associated with an additively manufactured object. The calibration model may include, without limitation, a desired thermal profile including, e.g., an expected or desired melt pool size and temperature under a given set of operating conditions (e.g., a power of beam devices 116A, 116B) of the additive manufacturing system 100. The build file may include build parameters that are used to control one or more components of the additive manufacturing system 100. Build parameters may include, without limitation, a power of beam devices 116A, 116B and a position and/or orientation of the beam devices 116A, 116B relative to the build platform 134. In other embodiments, computer system 106 and the additive manufacturing machine 114 may be combined as a single device that operates as both computer system 106 and the additive manufacturing machine 114 as each are described herein.

In one embodiment, the computer system 106 includes the memory component 102 and a processor 108 coupled to the memory component 102. The processor 108 may include one or more processing units, such as, without limitation, a multi-core configuration. In one embodiment, the processor 108 includes a field programmable gate array (FPGA). In other embodiments, the processor 108 may include any type of processor that enables computer system 106 to function as described herein. In some embodiments, executable instructions are stored in the memory component 102. The computer system 106 is configurable to perform one or more executable instructions described herein by programming the processor 108. For example, the processor 108 may be programmed by encoding an operation as one or more executable instructions and providing the executable instructions in the memory component 102. In one embodiment, the memory component 102 is one or more devices that enable storage and retrieval of information such as, without limitation, executable instructions or other data. The memory component 102 may include one or more tangible, non-transitory, computer readable media, such as, without limitation, random access memory (RAM), dynamic RAM, static RAM, a solid-state disk, a hard disk, read-only memory (ROM), erasable programmable ROM, electrically erasable programmable ROM, or nonvolatile RAM memory. The above memory types are exemplary and are thus not limiting as to the types of memory usable for storage of a computer program.

The user input device 110 includes a memory component 130, a processor 124, a display device 126, and an input device 128, as described in more detail herein. The memory component 130, the processor, 124, the display device 126, and the input device 128 (e.g., a keyboard or other input means), are all connected and communicate to one another via a bus 136.

The processor 124 may include any processing component configured to receive and execute instructions (such as from the memory component 130). The input device 128 may include a keyboard, mouse, printer, camera, microphone, speaker, touch-screen, and/or other device for receiving input and outputting information. The network 112 may include any wired or wireless networking hardware, such as a modem, Local Area Network (LAN) port, wireless fidelity (Wi-Fi) card, WiMax card, mobile communications hardware, and/or other hardware for communicating with other networks and/or devices, such as the additive manufacturing machine 114 of FIG. 1.

The memory component 130 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 130 may be configured to store operating logic. A network 112 is also included in the additive manufacturing system 100 and may be implemented as a bus or other interface to facilitate communication among the components of the additive manufacturing system 100.

The build file 104 can contain instructions for operating the additive manufacturing machine 114 and specifically the beam devices 116A, 116B. The file can include instructions and parameters, for instance, to set beam power to a number of watts, set the speed of the beam to a predetermined millimeters per second and set spot size, among other variables. Further, the build file 104 can include desired thermal profiles for each melting point of each layer of an additively manufactured object.

The computer system 106 is configured to control one or more components of the additive manufacturing system 100 based on build parameters associated with a build file 104 stored, for example, within computer system 106. In the one embodiment, computer system 106 is configured to control the additive manufacturing machine 114 based on a build file associated with an additively manufactured object with the additive manufacturing system 100.

The computer system 106 may also be configured to control other components of additive manufacturing system 100, including, without limitation, the beam devices 116A, 116B. In one embodiment, for example, computer system 106 controls a power output of the beam devices 116A, 116B based on a generated melt strategy and a desired thermal profile associated with the build file 104. In some embodiments, the computer system 106 can include a presentation interface coupled to the processor 124 or the computer system 106 can use the user input device 110 to display a user interface on the display device 126. A user interface presents information, such as, without limitation, operating conditions of the additive manufacturing system 100, to a user. In one embodiment, presentation interface includes a display adapter (not shown) coupled to a display device such as, without limitation, a cathode ray tube (CRT), a liquid crystal display (LCD), an organic light-emitting diode (OLED) display, or an "electronic ink" display. In some embodiments, presentation interface includes one or more display devices. In addition, or alternatively, presentation interface includes an audio output device (not shown), for example, without limitation, an audio adapter or a speaker (not shown).

In some embodiments, computer system 106 includes a user input interface or the user input device 110 can be used instead. In one embodiment, the user input device 110 is coupled to processor 108 and receives input from a user. The user input device 110 may include, for example, without limitation, a keyboard, a pointing device, a mouse, a stylus, a touch sensitive panel, such as, without limitation, a touch pad or a touch screen, and/or an audio input interface, such as, without limitation, a microphone. A single component, such as a touch screen, may function as both a display device 126 of a presentation interface and the user input device 110.

In one embodiment, the network 112 is configured to be coupled in communication with one or more other devices, such as, without limitation, the computer system 106, the user input device 110, and the additive manufacturing machine 114. Each of these devices can include, for example, without limitation, a wired network adapter, a wireless network adapter, a mobile telecommunications adapter, a serial communication adapter, or a parallel communication adapter. The network 112 may receive a data signal from or transmit a data signal to one or more remote devices.

In one embodiment, the computer system 106 is also configured to operate at least partially as a data acquisition device and to monitor the operation of the additive manufacturing system 100 during fabrication of an additively manufactured object. In one embodiment, for example, the computer system 106 receives and processes electrical signals from the additive manufacturing machine 114, including, for example, image data, from the sensors 132 (including, e.g., a camera) of an additively manufactured object during additive manufacturing of the additively manufactured object. The computer system 106 may store information, such as image data, associated with the additively manufactured object to, e.g., generate geometry data of a surface of a partially manufactured object.

In one embodiment of the present disclosure, treatment settings, steps, and parameters such as a beam duration, beam power, beam spot diameter, beam shape, beam movement, and/or beam movement speed of beam(s), spot size of beam(s), heating parameters of beam(s) or of a heating source, cooling parameters of beam(s), of a heating source, or of a cooling source, and/or other variables are set to a particular amount in the build file 104 and may be associated with a particular point or a plurality of points of each layer of an additively manufactured object.

It should be noted that any of the methods described herein can include an additional step of providing a system comprising distinct software modules embodied on a computer readable storage medium; the modules can include, for example, any or all of the elements depicted in the block diagrams and/or described herein; by way of example and not limitation, a geometrical compensation module. The method steps can then be carried out using the distinct software modules and/or sub-modules of the system, as described above, executing on one or more hardware processors. Further, a computer program product can include a computer-readable storage medium with code adapted to be implemented to carry out one or more method steps described herein, including the provision of the system with the distinct software modules.

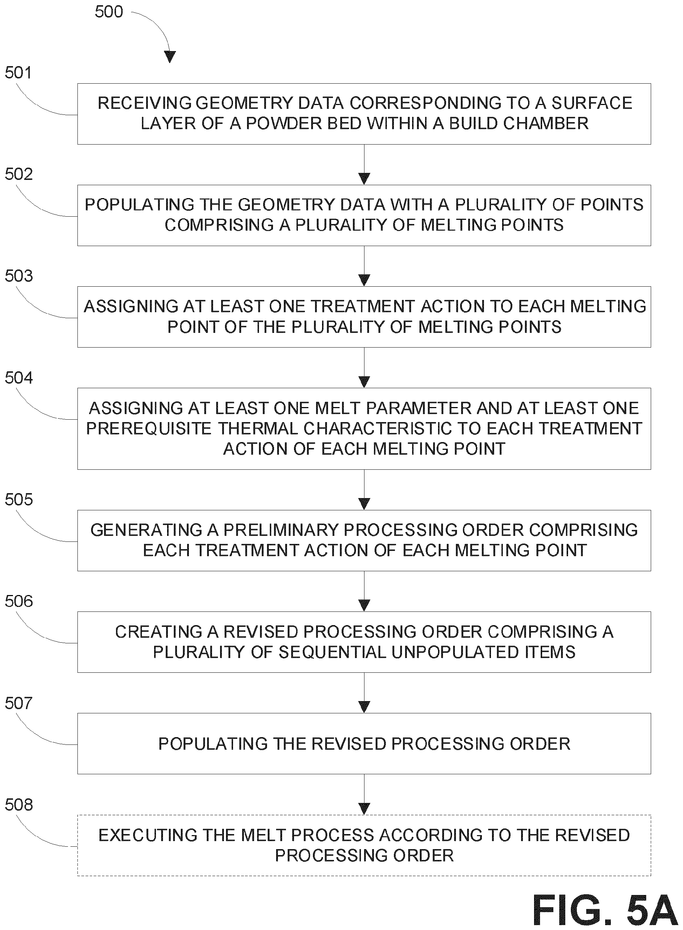

FIGS. 5A-B depict a process 500 for generating a melting strategy for an additive manufacturing system (e.g., an electron beam additive manufacturing system), such as the additive manufacturing system 100 as shown in FIGS. 1-4, according to one embodiment of the present disclosure.

Referring to FIG. 5A and as shown in FIGS. 1-3, the process 500 begins at block 501 with receiving geometry data corresponding to the surface layer 240 of the powder bed 142 within the build chamber 150 of the additive manufacturing system 100. In embodiments, the geometry data is received by the computer system 106 and is received from the sensors 132 including, e.g., cameras. In embodiments, the geometry data is a graphical, mathematical, or otherwise digital representation of a surface of the partially manufactured object 140, the powder bed 142, and/or the surface layer 240 at a moment in time (e.g., after deposition of the surface layer 240 and before treatment of the surface layer 240). In embodiments, the geometry data is generated by the geometry model 103 based on, in certain such embodiments, image data received from the sensors 132, and, in further such embodiments, the image data corresponds to a surface of the partially manufactured object 140, the powder bed 142, and/or the surface layer 240 during additive manufacturing (e.g., after deposition of the surface layer 240 and prior to treatment of the surface layer 240).

The process 500 continues at block 502 with populating the geometry data with a plurality of points comprising a plurality of melting points. In embodiments, the plurality of melting points includes every point of the plurality of points. In other embodiments, the plurality of melting points is a subset of the plurality of points (e.g., only comprising points of the plurality of points that correspond to the surface layer 240). In embodiments, a point may be a coordinate of the geometry data associated with a center of a region defined by lines and/or curves.

In embodiments, the computer system 106 populates the geometry data with the plurality of points comprising the plurality of melting points. In certain such embodiments, the geometry model 103 populates the geometry data with the plurality of points comprising the plurality of melting points.

In embodiments, the geometry data includes a lattice of lines defining the plurality of points in a two-dimensional representation of a surface of the partially manufactured object 140. Referring to FIG. 6A, an illustrative first geometry data 610 corresponds to a portion of the surface layer 240 as depicted in FIG. 2. In the embodiment of FIG. 6A, the first geometry data 610 is populated with a plurality of points, such as points 611, 612, defined by a lattice of evenly spaced (e.g., having a constant distance from neighboring parallel lines) parallel and perpendicular lines. In the embodiment of FIG. 6A, each of the points (e.g., the points 611, 612) of the plurality of points of the first geometry data 610 correspond to a region (as defined by the lines of the first geometry data 610) of the surface layer 240. In embodiments, each point corresponds to a small region of the surface layer 240. Since each of the points depicted in the first geometry data 610 of FIG. 6A correspond to the surface layer 240, each of the points of the first geometry data 610 are melting points.

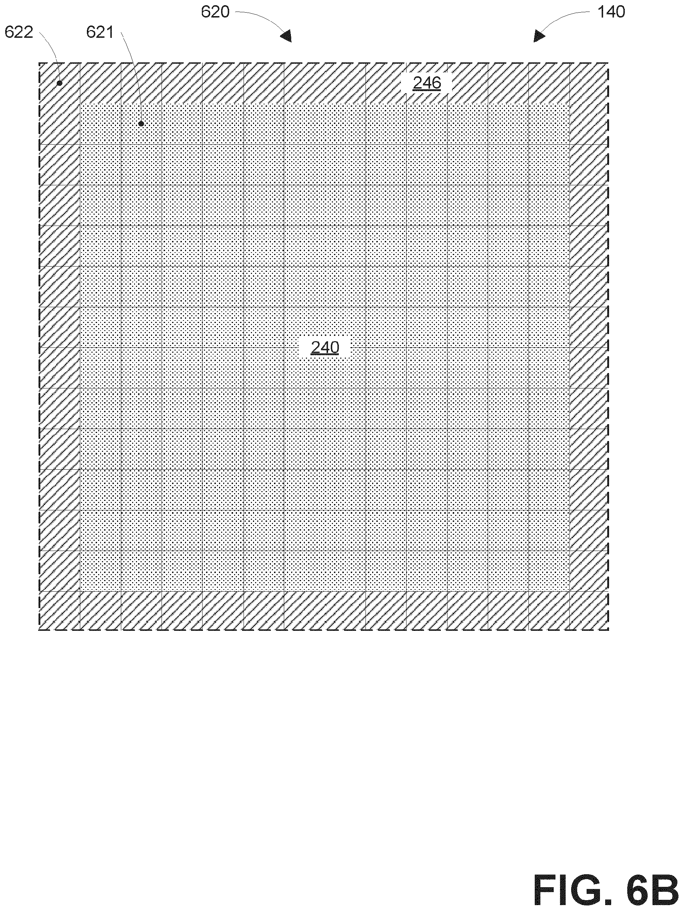

However, referring to FIG. 6B, an illustrative second geometry data 620 corresponds to a surface of the partially manufactured object 140 including the surface layer 240 and the lower treated layer 246 as depicted in FIG. 3. In the embodiment of FIG. 6B, a melting point 621 is a melting point because the melting point 621 corresponds to a region (as defined by lines of the second geometry data 620) of the surface layer 240. However, unlike the plurality of points of the first geometry data 610, not all of the points of the plurality of points of the second geometry data 620 are melting points. For example, a non-melting point 622 is not a melting point, because the non-melting point 622 corresponds to a region of the lower treated layer 246, rather than a region of the surface layer 240. Since the region of the non-melting point 622 contains exclusively the lower treated layer 246, and since, at the moment in time corresponding to the geometry data 620 (e.g., the time at which the image data used to generate the geometry data was taken), the lower treated layer 246 has already undergone treatment, the region of the non-melting point 622 has previously undergone treatment and thereby is not a melting point.

Returning to block 502 of FIG. 5A, in embodiments, the plurality of points of the geometry data may be adaptively spaced, rather than, e.g., evenly spaced, as in the embodiments of FIGS. 6A-B. Adaptively spaced points do not maintain a constant distance between neighboring points, and, instead, a distance between neighboring adaptively spaced points may vary from point to point of the plurality of points of the geometry data. By being adaptively spaced, the plurality of points of the geometry data may correspond to a non-planar surface, such as in embodiments wherein a surface of the partially manufactured object 140 is non-planar, by, e.g., adapting to a topography of a surface of the partially manufactured object 140 and/or of the surface layer 240. Further, by being adaptively spaced, individual points of the plurality of points of the geometry data may be able to correspond to regions of adjustable size to account for, e.g., identical desired thermal profiles of regions that would, if the points were evenly spaced, correspond to a plurality of points. In certain such embodiments, at least one melting point of the plurality of melting points includes a plurality of distinct points of the plurality of points, such that a certain singular melting point may correspond to several points of the plurality of points by, e.g., making at least one line and/or curve of the geometry data discontinuous. Further, by being adaptively spaced, the plurality of points of the geometry data may improve process efficiency of a melt process, e.g., by eliminating or combining melt points. Further, by being adaptively spaced, the plurality of points of the geometry data may improve control of a microstructure (e.g., of a single crystal alloy or superalloy component), e.g., by providing a greater number of melt points in areas requiring higher precision of treatment. In embodiments, populating the geometry data with the plurality of adaptively spaced points includes at least one of: adaptively spacing lines in the geometry data; adaptively spacing lines or curves filling out regions of the geometry data; generating fixed patterns with adaptive spacing, wherein the fixed patterns adaptively fill out regions of the geometry data; or a combination thereof.

In one embodiment, populating the geometry data with a plurality of adaptively spaced points includes adaptively spacing lines in the geometry data. Referring to FIG. 7A, an illustrative third geometry data 710 corresponds to a portion of the surface layer 240 as depicted in FIG. 2 and includes adaptively spaced lines which define a plurality of points of the third geometry data 710. Like the lines of the geometry data 610, 620, the lines of the third geometry data 710 are straight. However, the lines of the third geometry data 710 do not define evenly spaced points, and, further, the regions of the points of the third geometry data 710 are not evenly sized. Rather, parallel lines of the geometry data 710 do not share a constant spacing between each other, resulting in, for example, a region of a first point 711 being smaller than a region of a second point 712. Further, not all lines of the third geometry data 710 are continuous; for example, a melting point 713 includes a region that, were a line 714 continuous, would be divided into two regions and associated points. However, as described above, in embodiments, a plurality of regions (e.g., having identical desired thermal profiles) which would correspond to a plurality of points may instead correspond a single melting point, such as the melting point 713. In embodiments, adaptively spaced lines may not reflect the spacing or pattern of the geometry data 710; rather, embodiments may include any combination of adaptively spaced lines and/or discontinuous lines, depending on factors such as the structure of a surface of the partially manufactured object 140, desired thermal profiles of regions of geometry data, and other contextual factors.

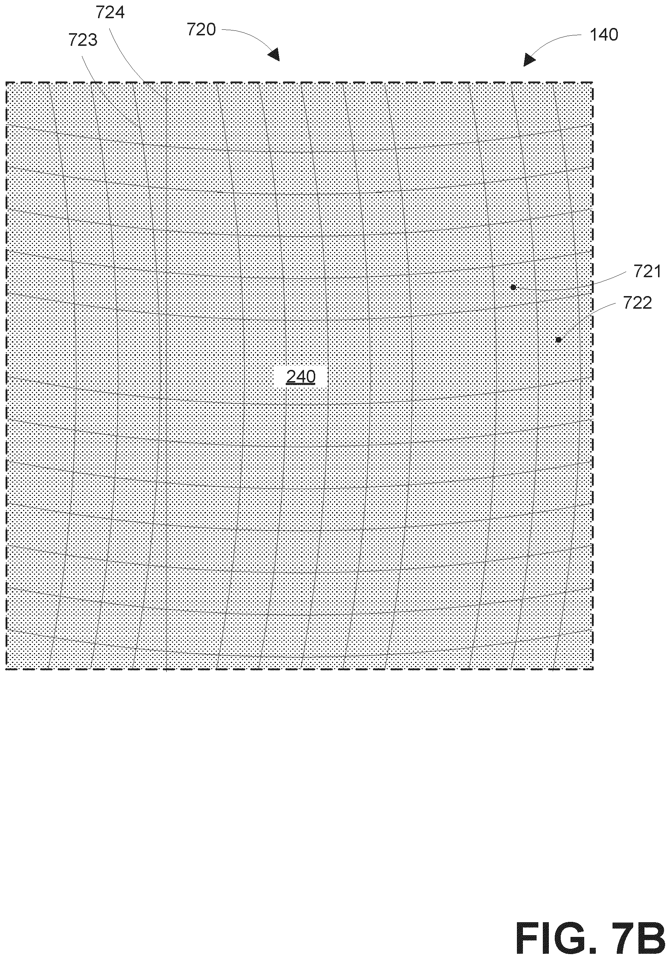

In one embodiment, populating the geometry data with a plurality of adaptively spaced points includes adaptively spacing curves of the geometry data. Referring to FIG. 7B, an illustrative fourth geometry data 720 corresponds to a portion of the surface layer 240 as depicted in FIG. 2 and includes adaptively spaced curves which define a plurality of points of the fourth geometry data 720. Unlike the lines of the geometry data 610, 620, 710, the fourth geometry data 720 instead includes curves. The curves of the fourth geometry data 720 are adaptively spaced, such that each curve does not define evenly spaced points, and regions of the points of the fourth geometry data 720 are not evenly sized. For example, a region of a first point 721 is smaller than that of a region of a second point 722. Further, not all curves of the fourth geometry data share an identical curvature; for example, a curve 723 has a differing curvature from a curve 724. In other embodiments, however, all curves of a geometry data may have an identical curvature. In embodiments, a geometry data includes a combination of curves and lines. In embodiments, some curves of a geometry data may be discontinuous, e.g., to enable a melting point to include a plurality of points by merging regions of such points together. In embodiments, curves of the geometry data may form discs (not shown), wherein, in certain such embodiments, each curve defines a circular or ovoid shape by, for example, extending, rather than from one point to another point, about a central point in a single continuous arc. For example, in embodiments, the curve 723 may extend radially about a central point, defining a circle.

In one embodiment, populating the geometry data with a plurality of adaptively spaced points includes generating fixed patterns with adaptive spacing. In some such embodiments, the fixed patterns adaptively fill out regions of the geometry data. In embodiments, fixed patterns include at least one of a triangular shape, a quadratic shape, a pentagonal shape, a hexagonal shape, or any other polygonal shape. In embodiments, fixed patterns include either or both of lines and curves.

In some embodiments, geometry data includes a plurality of adaptively spaced points using any combination of the spacing mechanisms, lines, and curves described with reference to FIGS. 6A-6B and FIGS. 7A-7B. In embodiments, curves and/or lines may not end on an edge of a geometry data. In further embodiments, curves and/or lines may be used to create shapes which define, in combination with other curves and/or lines or without other curves and/or lines, regions and associated points. In embodiments, lines and/or curves of a geometry data contact at least one of a boundary of the geometry data; a medial axis of the geometry data; or lines parallel to a coordinate axis of a plurality of coordinate axes, wherein each coordinate axis is perpendicular to the medial axis; or a combination thereof.

In some embodiments, geometry data is not a two-dimensional representation of a surface of the partially manufactured object 140, and instead is three-dimensional (comprising, e.g., voxels).

In embodiments, and as is described in further detail below with reference to FIG. 7B, populating the geometry data with a plurality of adaptively spaced points includes dividing the geometry data with at least partially overlapping discs, wherein each of the at least partially overlapping discs represents a region affected by a treatment action treating a melting point of the disc (the melting point correspond to at least a portion of the disc). In embodiments, the at least partially overlapping discs may vary in size. In embodiments, the at least partially overlapping discs may comprise one or more melting points. In some such embodiments, melting points may vary in size between discs and/or within a disc, and, in other such embodiments, melting points may be constant in size between discs and/or within a disc. In embodiments, a melting point is positioned at the center of a disc. In some embodiments, a melting point occupies an entire disc. In such embodiments, one or more melting points may overlap with one or more other melting points.

Returning to FIG. 5A and as shown in FIGS. 2 and 6A, the process 500 continues at block 503 with assigning at least one treatment action to each melting point of the plurality of melting points. In embodiments, the computer system 106 assigns the at least one treatment action to each melting point of the plurality of melting points. In embodiments, the computer system 106 receives the treatment actions from the build file 104. In certain such embodiments, the computer system 106 translates treatment actions associated with points of a build geometry data of the build file 104 into treatment actions associated with the melting points of the geometry data of block 501.

In embodiments, each treatment action of each melting point includes a pre-melting action, a melting action, or post-melting action. As such, a specific melting point of the geometry data may, in differing embodiments, be assigned no pre-melting actions, one pre-melting action, or a plurality of pre-melting actions. Similarly, a specific melting point of the geometry data may, in differing embodiments, be assigned no melting actions, one melting action, or a plurality of melting actions. Further, a specific melting point of the geometry data may, in differing embodiments, be assigned no post-melting actions, one post-melting action, or a plurality of post-melting actions. In embodiments, the number of each type of treatment action assigned to a melting point (including whether or not any of that type of treatment action are assigned at all) is determined (e.g., by the computer system 106) according to a desired thermal profile of that melting point (according to, e.g., the build file 104). Further, in embodiments, each treatment action of each melting point includes a heating action (imparted by, e.g., the heating source 122 or by one of the beam devices 116A, 116B) or a cooling action (imparted by, e.g., the cooling source 121). In embodiments, a heating action may impart a rate of heating upon build material of a region associated with a melting point. In embodiments, a heating action may increase a rate of heating of build material of a region associated with a melting point. In embodiments, a heating action may decrease a rate of cooling of build material of a region associated with a melting point. In embodiments, a cooling action may impart a rate of cooling upon build material of a region associated with a melting point. In embodiments, a cooling action may increase a rate of cooling of build material of a region associated with a melting point. In embodiments, a cooling action may decrease a rate of heating of build material of a region associated with a melting point.

In embodiments, pre-melting actions include warming build material of a region of the surface layer 240 associated with the melting point to prepare the build material for melting. In embodiments, without warming build material within the build chamber 150 prior to exposure to, e.g., the beam 216, can shock the build material (e.g., due to heating the build material too rapidly), and such shock can cause defects in the solidification of the build material. Rather, by pre-heating the build material via one or more pre-melting actions, the build material can, during treatment in a melting step (by, e.g., the beam 216), undergo a lesser rate in change in temperature, reducing shock and/or likelihood of deformations forming in the build material. In embodiments, a pre-melting action is conducted by the heating source 122. In embodiments, a pre-melting action is conducted by one or both of the beam devices 116A, 116B. In embodiments, a duration, intensity, imparted temperature gradient as a function of time, and other aspects of a pre-melting action may be determined (e.g., by the computer system 106) as melt parameters according to a desired thermal profile of build material of a region of a melting point to which the pre-melting action is assigned. In embodiments, a pre-melting action is imparted by either or both of the heating source 122 and/or the beam 216.

In embodiments, melting actions include treatment of build material of a region of the surface layer 240 associated with the melting point to melt the build material (e.g., by heating the build material to a melting temperature). In embodiments, treatment of a region may include contacting the region with the beam 216. As described above, the beam 216 may be, in embodiments, an electron beam or a laser beam. In embodiments, treatment by the beam 216 of a melting point includes contacting the entirety of a region of the melting point with the beam 216. In embodiments, treatment by the beam 216 of a melting point includes contacting only a portion of a region of the melting point with the beam 216. By treating build material of a region of a melting point, the beam 216 may heat such build material to a melting temperature, to enable the solidification of the build material of the region of the melting point. In embodiments, a duration, intensity, imparted temperature gradient as a function of time, and other aspects of a melting action may be determined (e.g., by the computer system 106) as melt parameters according to a desired thermal profile of build material of a region of a melting point to which the melting action is assigned. In embodiments, a melting action is imparted by the beam 216.

In embodiments, post-melting actions include cooling build material of a region of the surface layer 240 associated with the melting point, including imparting a rate of cooling or increasing (e.g., by a cooling step) or decreasing (e.g., by a heating step) a rate of cooling of build material of the region of the surface layer 240 associated with the melting point. In embodiments, post-melting actions include re-heating build material of a region of the surface layer 240 associated with the melting point, including imparting a rate of heating or increasing (e.g., by a cooling step) or decreasing (e.g., by a heating step) a rate of heating of build material of the region of the surface layer 240 associated with the melting point. In embodiments, controlling cooling of the build material of the region of the melting point may be necessary, depending on a desired thermal profile of the melting point, to ensure that the build material of the region of the melting point retains an actual thermal profile throughout a cooling process (e.g., by increasing or decreasing a rate of cooling of the build material) within bounds defined by the desired thermal profile (e.g., to prevent defects from forming in the build material). In embodiments, a post-melting action is conducted by the cooling source 121, by the heating source 122, and/or by one or both of the beam devices 116A, 116B. In embodiments, re-heating the build material of the region of the melting point may be necessary, depending on a desired thermal profile of the melting point, to prepare the build material of the region of the melting point for subsequent treatment actions (e.g., subsequent melting steps). In embodiments, a duration, intensity, imparted temperature gradient as a function of time, and other aspects of a pre-melting action may be determined (e.g., by the computer system 106) as melt parameters according to a desired thermal profile of build material of a region of a melting point to which the post-melting action is assigned.

In embodiments, treatment actions include only melting actions. In embodiments, treatment actions include only pre-melting actions. In embodiments, treatment actions include only post-melting actions. In embodiments, treatment actions include only pre-melting actions and melting actions. In embodiments, treatment actions include only melting actions and post-melting actions. In embodiments, treatment actions include only pre-melting actions and post-melting actions. In embodiments, treatment actions include only heating actions. In embodiments, treatment actions include only cooling actions.

Further, in embodiments and as will be described in further detail below, treatment actions of a like type (e.g., pre-melting actions) may not be the same as every other treatment action of that type of each melting point assigned a treatment action of that type. Rather, in embodiments, qualities of each treatment action of a like type may vary according to a desired thermal profile of the melting point to which the treatment action is assigned.

In embodiments, one or more pre-melting actions may occur before, during, and/or after one or more melting actions. In embodiments, one or more pre-melting actions may occur before, during, and/or after one or more post-melting actions. In embodiments, one or more melting actions may occur before, during, and/or after one or more pre-melting actions. In embodiments, one or more melting actions may occur before, during, and/or after one or more post-melting actions. In embodiments, one or more post-melting actions may occur before, during, and/or after one or more pre-melting actions. In embodiments, one or more post-melting actions may occur before, during, and/or after one or more melting actions.

Referring again to FIG. 5A and as shown in FIGS. 2 and 6A, the process 500 continues at block 504 with assigning at least one melt parameter and at least one prerequisite thermal characteristic to each treatment action of each melting point. In embodiments, the at least one melt parameter is assigned to each treatment action of each melting point by the computer system 106. In embodiments, the at least one prerequisite thermal characteristic is assigned to each treatment action of each melting point by the computer system 106. In embodiments, at least one melt parameter is assigned to each treatment action of each melting point according to a desired thermal profile of build material of a region of the surface layer 240 associated with the melting point. In embodiments, at least one prerequisite thermal characteristic is assigned to each treatment action of each melting point according to a desired thermal profile of build material of a region of the surface layer 240 associated with the melting point.

A "melt parameter," as described herein, is a quality or qualities associated with a treatment action. In embodiments, a melt parameter includes a duration, intensity, imparted temperature gradient as a function of time, and other aspects of a treatment action. In embodiments, a melt parameter is determined (e.g., by the computer system 106) according to a desired thermal profile of build material of a region of a melting point to which the post-melting action is assigned (as determined by, e.g., the build file 104). In embodiments, a melt parameter of a treatment action imparted by the beam 216 (e.g., a pre-melting action or a melting action) includes at least one of a beam duration parameter (e.g., an amount of time which the beam 216 contacts build material of the region of the surface layer 240 associated with the melting point to which the treatment action is assigned), a beam power parameter (e.g., a power of the beam 216), a beam spot diameter parameter (e.g., a spot size of the beam 216 as measured upon the surface layer 240), a beam shape parameter (e.g., a shape of an intensity profile of an intersection between the beam 216 and a plane of the surface layer 240), a beam movement parameter (e.g., local beam movements of the beam 216 on the surface layer 240 encircling the region of the surface layer 240 associated with the melting point to which the treatment action is assigned or encircling the melting point to which the treatment action is assigned), a beam movement speed parameter (e.g., the speed of a beam movement or beam movements of a beam movement parameter), or a combination thereof.

A "prerequisite thermal characteristic" of a treatment action, as described herein, is a set of one or more conditions of build material (e.g., build material of a region of the surface layer 240 associated with a melting point to which a treatment action of the prerequisite thermal characteristic is assigned) which must be met prior to the treatment action being imparted upon the build material. In embodiments, a prerequisite thermal characteristic is determined (e.g., by the computer system 106 and/or using the build file 104) according to a desired thermal profile of build material of a region of the surface layer 240 associated with a melting point to which a treatment action of the prerequisite thermal characteristic is assigned. In embodiments, a prerequisite thermal characteristic of a treatment action of a melting point includes at least one of: a melting point temperature range of the melting point (e.g., a range of temperatures at which a build material melts or is desired to have a temperature within for melting); an area temperature range of at least some points within a pre-defined range of the melting point (e.g., a temperature range of neighboring points to account for heat diffusion by the neighboring points or by the melting point after treating); a material state of the melting point (e.g., a material state of build material associated with the melting point); a material phase of the melting point (e.g., a material state of build material associated with the melting point); a time value associated with a predicted temperature of the melting point (as predicted by, e.g., a thermal model); a time value associated with a predicted temperature range of the melting point (as predicted by, e.g., a thermal model); a time value associated with a predicted material state of the melting point (as predicted by, e.g., a thermal model); a time value associated with a predicted material phase of the melting point (as predicted by, e.g., a thermal model); or a combination thereof. In embodiments, a prerequisite thermal characteristic may be null or otherwise ambivalent to conditions of build material (e.g., for a pre-melting action). In embodiments, when generating a melt strategy, a prerequisite thermal characteristic is determined to be met by the thermal model 105 which determines, for each successive treatment action of a processing order of a melt strategy, thermal characteristics of build material (e.g., on the basis of regions associated with melt points) based on prior treatment actions and predicted thermal effects of such treatment actions. In embodiments, such prediction of thermal effects of treatment actions may include consideration of part or whole of the surface layer 240, rather than on a melt point-by-melt point basis, due to effects that a thermal characteristic (e.g., a temperature) of build material of a region associated with one melt point has upon build material of nearby regions associated with other melt points (e.g., due to heat diffusion).

Returning to FIG. 5A, the process 500 continues at block 505 with generating a preliminary processing list comprising each treatment action of each melting point. In embodiments, the computer system 106 generates the preliminary processing list. In embodiments, the preliminary processing list is a sequential listing of every treatment action assigned at the block 503. In embodiments, the preliminary processing list further includes any or all of the melting point to which the treatment action is assigned, the at least one melt parameter assigned to the treatment action, and/or the at least one prerequisite thermal characteristic of each treatment action. In embodiments, an order of the treatment actions within the preliminary processing list is random, is organized by type of treatment action (e.g., all pre-melting actions, then all melting actions, then all post-melting actions), is organized by melting point (e.g., all treatment actions of a first melting point, then all treatment actions of a second melting point, etc.), or some combination thereof. In some embodiments, the generating of a preliminary processing list includes ordering each treatment action of each melting point according to an ordering strategy. In certain such embodiments, the ordering strategy includes a heat spreading strategy, a heat localizing strategy, or a combination thereof.

As described herein, a "heat spreading strategy" is an ordering strategy that orders treatment actions such that heat is spread uniformly or substantially uniformly throughout build material (e.g., of the surface layer 240). A particular heat spreading strategy is uniform random ordering among all melting points or among a subset of melting points.

As described herein, a "heat localizing strategy" is an ordering strategy that orders treatment actions such that heat diffusion is localized to particular regions of build material (e.g., of the surface layer 240). A particular heat localizing strategy is ordering treatment actions by increasing distance to a given reference point (e.g., one of the melting points) or along a space filling curve or line (e.g., a curve or line of geometry data as described in FIGS. 6A-6B, 7A-7B).

Returning to FIG. 5A, the process 500 continues at block 506 with creating a revised processing order comprising a plurality of sequential unpopulated items. In embodiments, each unpopulated item is associated with a sequential time value (e.g., with one or more milliseconds between each unpopulated item). In embodiments, the computer system 106 creates the revised processing order. As described herein, a "revised processing order" is a melt strategy which includes an order of sequential items. Once populated, as described in further detail below, the revised processing order includes an order of populated items including instructions pertaining to all treatment actions (e.g., the treatment actions assigned in the block 503) to treat a layer of build material (e.g., the surface layer 240), and populated items of the revised processing order are ordered according to predicted thermal profiles of regions resulting from such treatment actions when compared to desired thermal profiles of the regions (e.g., to create a processing order having predicted thermal profiles which reside within bounds of the desired thermal profiles). As will be described in further detail below, the revised processing order may be populated iteratively, such that a treatment action to occur first in time is determined (and populated into the revised processing order) first, a second treatment action to occur second in time is determined (and populated into the revised processing order) second, etc., such that thermal profiles resulting from such treatment actions may be predicted iteratively. Once all treatment actions necessary to treat a layer of build material have been populated into the revised processing order, the revised processing order may be executed (e.g., by the additive manufacturing system 100) as a melt strategy to melt and solidify the layer of build material. As described herein, an "unpopulated item" of the revised processing order is a placeholder item in the revised processing order to be assigned with an assignment (e.g., a treatment action or a wait period, as will be described in further detail below). Once an unpopulated item has been assigned an assignment, it is no longer an unpopulated item, and instead becomes a populated item.

In embodiments, each sequential time value of each item of a revised processing order may be equal. In other embodiments, sequential time values of some or all items of a revised processing order may vary. For example, in embodiments, a sequential time value of a first item of a revised processing order may be 1 µs and a sequential time value of a second item of the revised processing order may be 1 ms, such that the first item and the second item collectively correspond to a time period of 1,001 µs. In embodiments, sequential time values of items of a revised processing order may vary from sequential time values of items of differing revised processing orders due, e.g., to a composition of build material of the partially manufactured object 140, desired qualities of the partially manufactured object 140, treatment actions of the revised processing order, and/or other factors. In embodiments, sequential time values of items of a revised processing order may differ between any, some, or all items of the revised processing order due, e.g., to a treatment action assigned to the item of the sequential time value, a point associated with the treatment action assigned to the item of the sequential time value, a type of material within a region of space corresponding to the item of the sequential time value, and/or other factors.

In embodiments, a sequential time value of an item of a revised processing order may be greater than or equal to 1 µs (i.e., microseconds) and less than or equal to 100 ms (i.e., milliseconds). In embodiments, a sequential time value of an item of a revised processing order may be greater than or equal to 1 µs, greater than or equal to 10 µs, greater than or equal to 100 µs, greater than or equal to 1 ms, or even greater than or equal to 10 ms. In embodiments, a sequential time value of an item of a revised processing order may be less than or equal to 100 ms, less than or equal to 10 ms, less than or equal to 1 ms, less than or equal to 100 µs, or even less than or equal to 10 µs. In embodiments, a sequential time value of an item of a revised processing order may be greater than or equal to 1 µs and less than or equal to 10 ms. In embodiments, a sequential time value of an item of a revised processing order may be greater than or equal to 1 µs and less than or equal to 1 ms. In embodiments, a sequential time value of an item of a revised processing order may be greater than or equal to 1 µs and less than or equal to 100 µs. In embodiments, a sequential time value of an item of a revised processing order may be greater than or equal to 1 µs and less than or equal to 10 µs. In embodiments, a sequential time value of an item of a revised processing order may be greater than or equal to 10 µs and less than or equal to 10 ms. In embodiments, a sequential time value of an item of a revised processing order may be greater than or equal to 10 µs and less than or equal to 1 ms. In embodiments, a sequential time value of an item of a revised processing order may be greater than or equal to 10 µs and less than or equal to 100 µs. In embodiments, a sequential time value of an item of a revised processing order may be greater than or equal to 100 µs and less than or equal to 10 ms. In embodiments, a sequential time value of an item of a revised processing order may be greater than or equal to 100 µs and less than or equal to 1 ms. In embodiments, a sequential time value of an item of a revised processing order may be greater than or equal to 1 ms and less than or equal to 10 ms.

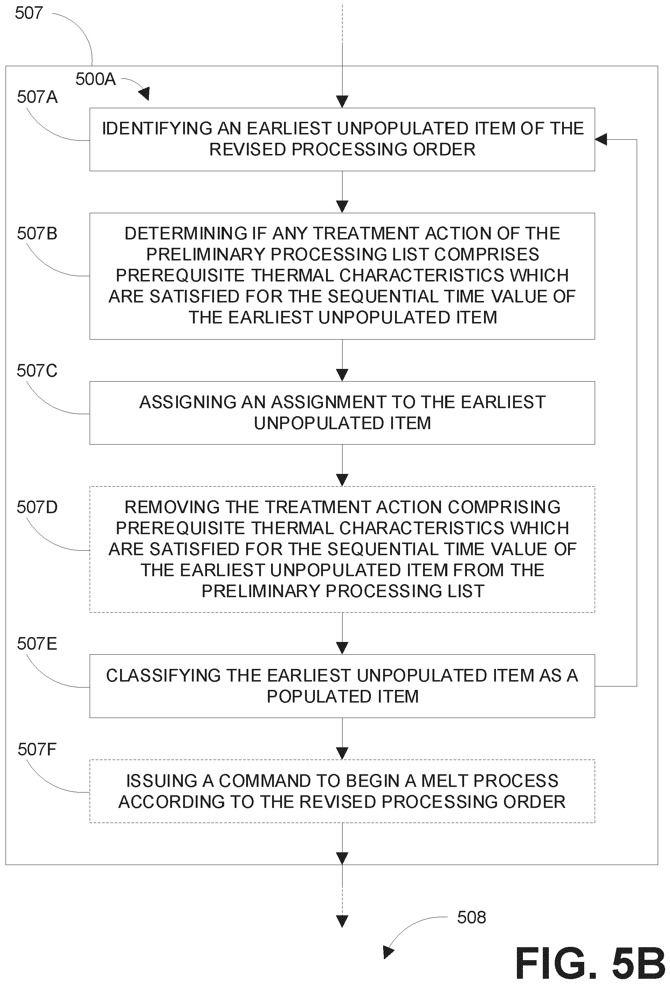

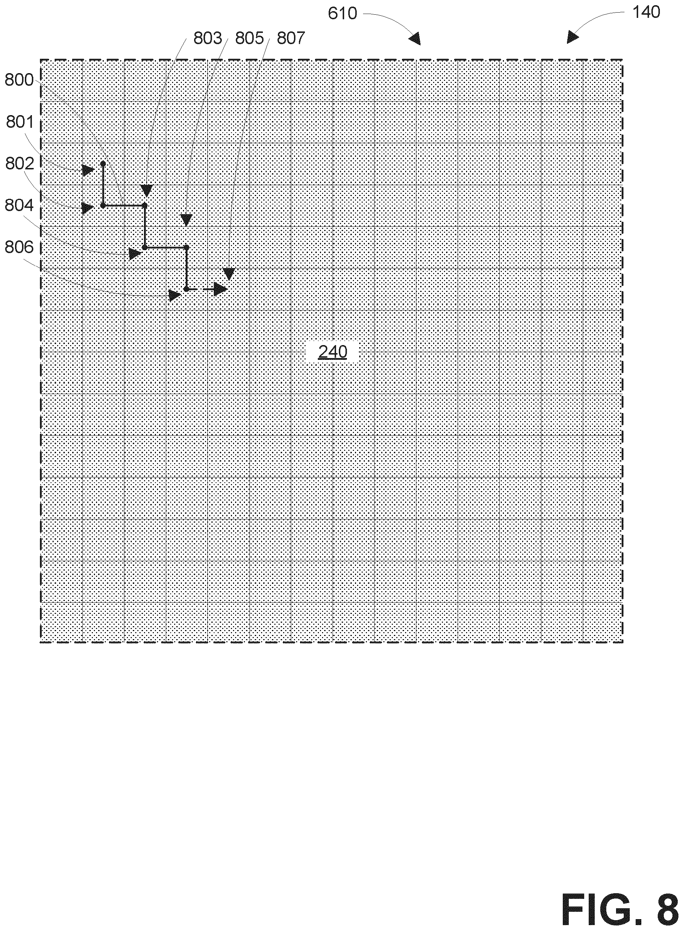

The process 500 continues at block 507, with populating the revised processing order. In embodiments, the block 507 includes a sub-process 500A, as shown in FIG. 5B. As described above, a processing order is an order of treatment actions used in a melt strategy to execute a melt process. Referring to FIG. 8, a processing order directs a melt path 800 along the surface layer 240 according to a coordinate scheme of the geometry data 610. In embodiments, the melt path 800 is a path of a treatment beam along a surface of the surface layer 240. In certain such embodiments, the treatment beam is an electron beam or a laser beam. In other embodiments, the melt path 800 is an order of treatment actions by other treatment mechanisms, such as the cooling source 121 and the heating source 122.

As shown in FIG. 8, the melt path 800 begins at a point 801, traverses to a point 802, then a point 803, then a point 804, then a point 805, then a point 806, then a point 807, and continues onward. In embodiments, the melt path is not a continuous motion, and instead a treatment mechanism (e.g., a beam) may stop at each point of the melt path for a predetermined amount of time (e.g., according to a melt parameter of the treatment action for that point, as will be described in further detail below). In embodiments, such as in embodiments wherein the melt path 800 is a melt path of a beam, the melt path may be continuous (e.g., traveling exclusively from one point to a neighboring point, as in the embodiment of FIG. 8), because, e.g., the beam cannot be quickly turned off and on. In other embodiments, such as in embodiments wherein the melt path 800 is a melt path of a heating source or of a cooling source, the melt path may be discontinuous. In some embodiments wherein a processing order of a melt strategy includes some combination of any or all of pre-melting actions, melting actions, and post melting actions, certain intervals of the processing list may include a continuous melt path (e.g., an interval of the processing list including melting actions), while other intervals may not be continuous (e.g., intervals of the processing list including pre-melting actions and/or post-melting actions). In embodiments, a processing order may include a plurality of melt paths. In such embodiments, a plurality of treatment actions may occur simultaneously in the processing order. Examples of such include additive manufacturing machines with a plurality of beam devices. In such embodiments, treatment actions of each beam device may include a continuous melt path while each beam device includes a separate melt path. In embodiments, certain treatment actions (e.g., melting actions and post-melting actions) may occur simultaneously (e.g., upon different regions of the surface layer 240), in which case, at a given point in time, there may simultaneously be a continuous melt path (of, e.g., the beam 216) and a discontinuous melt path (of, e.g., the cooling source 121).

By populating the revised processing order, a melt strategy may be generated for executing a melt process according to the revised processing order. Particularly, the melt strategy may include executing, in the melt process, the treatment actions of the revised processing order according to the sequential order of such treatment actions within the revised processing order.

Referring to FIG. 5B, the sub-process 500A begins at a sub-block 507A with identifying an earliest unpopulated item of the revised processing order. As described herein, an "earliest" unpopulated item of the revised processing order is the first item of the revised processing order, according to the sequential order of the items of the revised processing order, that has not been assigned an assignment. In embodiments, the earliest unpopulated item is identified by the computer system 106. In embodiments, during a first iteration of the sub-process 500A, the revised processing order includes exclusively unpopulated items, and so the earliest unpopulated item (e.g., the item with the earliest sequential time value) of the revised processing order is a first item of the revised processing order. In embodiments, after several iterations of the sub-process 500A, the revised processing order includes several populated items (e.g., treatment actions), and so the earliest unpopulated item of the revised processing order will not be the first item of the revised processing order.

The sub-process 500A continues at a sub-block 507B with determining if any treatment action of the treatment actions of the preliminary processing list includes prerequisite thermal characteristics which are satisfied for the sequential time value of the earliest unpopulated item. In embodiments, the computer system 106 determines if any treatment action of the treatment actions of the preliminary processing list includes prerequisite thermal characteristics which are satisfied for the sequential time value of the earliest unpopulated item. In embodiments, the thermal model 105 determines if any treatment action of the treatment actions of the preliminary processing list includes prerequisite thermal characteristics which are satisfied for the sequential time value of the earliest unpopulated item. In embodiments, the determining if any treatment action of the treatment actions of the preliminary processing list includes prerequisite thermal characteristics which are satisfied for the sequential time value of the earliest unpopulated item includes comparing thermal characteristics against the prerequisite thermal characteristics of at least some of the treatment actions of the preliminary processing list. Referring to FIG. 2, in certain such embodiments, the thermal characteristics are of build material of a region of the surface layer 240 associated with a melting point to which at least one of the at least some of the treatment actions to which the prerequisite thermal characteristics are assigned. In embodiments, the thermal characteristics are determined by the thermal model 105. In embodiments, the determining of if any treatment action of the treatment actions of the preliminary processing list includes prerequisite thermal characteristics which are satisfied for the sequential time value of the earliest unpopulated item includes predicting thermal characteristics (e.g., by the thermal model 105) of some or all of the melting points according to (e.g., by modeling effects of) any and/or all treatment actions assigned to populated items of the revised processing order. In certain such embodiments, predicting thermal characteristics includes predicting direct effects of treatment actions assigned to populated items of the revised processing order (e.g., heating resulting from a pre-melting step or a melting step or cooling resulting from a cooling step), indirect effects of treatment actions assigned to populated items of the revised processing order (e.g., via heat diffusion from treated build material), and/or environmental effects (e.g., environmental cooling of build material). In embodiments, the treatment actions of the preliminary processing list are considered, in the determining of sub-block 507A, in the order in which the treatment actions are listed within the preliminary processing list. In other embodiments, the treatment actions of the preliminary processing list are considered, in the determining of sub-block 507A, in any order.

In embodiments wherein a melt path must be continuous (such as the melt path 800 of FIG. 8), determining if any treatment action of the treatment actions of the preliminary processing list includes prerequisite thermal characteristics which are satisfied for the sequential time value of the earliest unpopulated item may only include consideration of treatment actions of melting points adjacent to a melting point of a treatment action of an item of the revised processing order immediately preceding the earliest unpopulated item. In embodiments comprising a plurality of melt paths (e.g., having a plurality of treatment actions per item of the revised processing order), such limitations of determining may be done on a melt path-by-melt path basis, such that each melt path is continuous but also discrete from other melt paths. In certain such embodiments, at sub-block 507B, determining if any treatment action of the treatment actions of the preliminary processing list includes prerequisite thermal characteristics which are satisfied for the sequential time value of the earliest unpopulated item includes determining a plurality of such treatment actions.

The sub-process 500A continues at a sub-block 507C with assigning an assignment to the earliest unpopulated item. In embodiments, the earliest unpopulated item changes with each iteration of the sub-process 500A (e.g., as the revised processing order is filled with treatment actions from the preliminary processing list). In embodiments, the assignment includes: a wait period; or the treatment action comprising prerequisite thermal characteristics which are satisfied for the sequential time value of the earliest unpopulated item. In certain such embodiments, the treatment action is the treatment action determined in the sub-block 507A. In embodiments, if none of the treatment actions of the treatment actions of the preliminary processing list are determined to include prerequisite thermal characteristics which are satisfied for the sequential time value of the earliest unpopulated item, then the assignment includes a wait period. In embodiments, the assignment includes the wait period only if no treatment action of the treatment actions of the preliminary processing list includes prerequisite thermal characteristics which are satisfied for the sequential time value of the earliest unpopulated item. In embodiments, if a treatment action of the treatment actions of the preliminary processing list is determined to include prerequisite thermal characteristics which are satisfied for the sequential time value of the earliest unpopulated item, then the assignment includes the treatment action.

A "wait period," as described herein, is an instruction (e.g., to the additive manufacturing machine 114), instructing treatment devices (e.g., any or all of the beam devices 116A, 116B, the cooling source 121, and/or the heating source 122) to either do nothing for the sequential time value associated with the earliest unpopulated item to which the wait period is assigned or to perform a uniform treatment action (e.g., heating or cooling uniformly with, e.g., the cooling source 121 or the heating source 122) upon some or all of a surface layer (e.g. the surface layer 240) for the sequential time value associated with the earliest unpopulated item to which the wait period is assigned (e.g., to cause one or more melt points to meet or to become closer to meeting prerequisite thermal conditions of at least one of the one or more melt points). When executing a melt process according to a revised processing order, at a time equal to the sequential time value of an item of the revised processing order to which a wait period is assigned, an additive manufacturing machine will cease treatment activity (e.g., by refraining from imparting any treatment action upon build material) or conduct a uniform treatment action until a time equal to the sequential time value of a subsequent item of the revised processing order. In embodiments, assigning an assignment to an unpopulated item may alter a time value of a sequential unpopulated item, to, e.g., account for a time necessary to complete a treatment action or a time for a wait period before a treatment action's perquisite thermal characteristics are met. In embodiments, such as in embodiments having a plurality of melt paths, the assignment includes a plurality of treatment actions occurring at the same time value of the earliest unpopulated item. In embodiments, the computer system 106 assigns the assignment.

The sub-process 500A optionally continues at optional sub-block 507D, with removing the treatment action comprising prerequisite thermal characteristics which are satisfied for the sequential time value of the earliest unpopulated item from the preliminary processing list. In embodiments, the optional sub-block 507D includes, if (and, in embodiments, only if) the assignment includes the treatment action comprising thermal characteristics which are satisfied for the sequential time value of the earliest unpopulated item, removing the treatment action comprising prerequisite thermal characteristics which are satisfied for the sequential time value of the earliest unpopulated item from the preliminary processing list. In embodiments, optional sub-block 507D may only occur if, at sub-507B, a treatment action of the preliminary processing list was determined to include a prerequisite thermal characteristic which was satisfied for the sequential time value. By removing an assigned treatment action from the preliminary processing list, the treatment action can be ensured to not occur twice (unless desired) in a subsequent melt process executed according to the revised processing order, since the treatment action has already been assigned to an item of the revised processing order and does not need to be considered in subsequent iterations (if any) of the sub-process 500A. In embodiments, the computer system 106 removes the treatment action from the preliminary processing list.

The sub-process 500A continues at sub-block 507E with classifying the earliest unpopulated item as a populated item. In embodiments, the computer system 106 classifies the earliest unpopulated item as a populated item. By classifying the earliest unpopulated item as a populated item, in subsequent iterations (if any) of the sub-process 500A, the (formerly) earliest unpopulated item will no longer be an earliest unpopulated item, and so, in such subsequent iterations (if any) of the sub-process 500A, the sub-process 500A can proceed with populating an item of the revised processing order having a later time value.

In embodiments, if the preliminary processing list includes treatment actions (e.g., if not all treatment actions of the preliminary processing list have been assigned to an unpopulated item, as in sub-block 500C, and subsequently removed from the preliminary processing list, as in optional sub-block 500D), then the sub-process 500A returns to the sub-block 507A. In such embodiments, the sub-process 500A will iterate between any, some, or all of the sub-blocks 507A, 507B, 507C, 507D, 507E until all treatment actions of the preliminary processing list have been assigned to an unpopulated item, as in sub-block 500C, and subsequently removed from the preliminary processing list, as in optional sub-block 500D.

The sub-process 500A continues at optional sub-block 507F, with issuing a command to begin a melt process according to the revised processing order. In embodiments, the optional sub-block 507F includes, if (and, in embodiments, only if) the preliminary processing list does not include treatment actions, issuing a command to begin a melt process according to the revised processing order. In embodiments, the optional sub-block 507F includes issuing a command to begin a melt process according to the revised processing order as a melt strategy. In embodiments, the revised processing order is a melt strategy which determines the melt process. In embodiments, the melt process includes treatment of build material (e.g., build material of the surface layer 240 of FIG. 2). Referring to FIG. 2, in embodiments, the computer system 106 issues the command to begin the melt process according to the revised processing order. In certain such embodiments, the computer system 106 issues the command to begin the melt process according to the revised processing order to the additive manufacturing machine 114.

In embodiments, the optional sub-block 507F occurs in real time (i.e., immediately after or soon after the revised processing order is completed and the sub-process 500A proceeds past the optional sub-block 507E, rather than to the sub-block 507A). In other embodiments, the revised processing order is pre-calculated or pre-computed, e.g., by conducting the populating of the revised processing order in the sub-blocks 507A-507E beforehand, storing the revised processing order, and, at a later time, retrieving the stored revised processing order to issue a command to begin a melt process according to the stored revised processing order.

Referring to FIGS. 5A-B, and as shown in FIG. 2, after the optional sub-block 507F of the sub-process 500A, the process 500 optionally continues at optional block 508 with executing the melt process according to the revised processing order. In embodiments, the additive manufacturing machine 114 executes the melt process according to the revised processing order. In embodiments, the melt process executes the revised processing order as a melt strategy. In embodiments, the executing of the melt process solidifies the surface layer 240. In embodiments, the executing of the melt process solidifies the surface layer 240 and forms an alloy. In embodiments, the executing of the melt process solidifies the surface layer 240 and forms a single crystal superalloy. In certain such embodiments, the superalloy is at least one of a nickel-based superalloy, a cobalt-based superalloy, or a combination thereof.

In embodiments, the additive manufacturing system 100 repeats the process 500 and/or the sub-process 500A iteratively. In certain such embodiments, the additive manufacturing system repeats the process 500 after deposition of some or all layers of build material of the partially manufactured object 140 and/or before deposition of subsequent layers of build material of the partially manufactured object 140.

An exemplary technical effect of the methods and systems described herein includes an ability to generate an advanced thermally adaptive point-based melt strategy for additive manufacturing, thereby enabling the additive manufacturing of additively manufactured objects having strict desired thermal profiles, such as single crystal parts having complex geometries.

Exemplary embodiments of the programs, devices, systems, and methods of generating melt strategies for additive manufacturing systems, including electron beam additive manufacturing systems, are described above in detail. The programs, devices, systems, and methods are not limited to the specific embodiments described herein, but rather, operations of the methods and components of the systems may be utilized independently and separately from other operations or components described herein. For example, the programs, devices, systems, and methods described herein may have other industrial or consumer applications and are not limited to practice with single crystal parts having complex geometries as described herein. Rather, one or more embodiments may be implemented and utilized in connection with other industries.

Although specific features of various embodiments of the disclosure may be shown in some drawings and not in others, this is for convenience. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Embodiments described herein are solely for the purpose of illustration. Those in the art will recognize other embodiments may be practiced with modifications and alterations to that described above.

This written description uses examples to explain the disclosure, including the best mode, and also to enable any person skilled in the art to practice the disclosure, including making and using any devices or systems and performing any incorporated methods. The patentable scope of the disclosure is defined by the claims appended hereto, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the present disclosure are provided by the subject matter of the following clauses:

A method for generating a melt strategy for an additive manufacturing system comprising the steps of: receiving geometry data corresponding to a surface layer of a powder bed within a build chamber of the additive manufacturing system; populating the geometry data with a plurality of points comprising a plurality of melting points; assigning at least one treatment action to each melting point of the plurality melting points; assigning at least one melt parameter and at least one prerequisite thermal characteristic to each treatment action of each melting point; generating a preliminary processing list comprising each treatment action of each melting point; creating a revised processing order comprising a plurality of sequential unpopulated items, wherein each unpopulated item of the revised processing order is associated with a sequential time value; and populating the revised processing order, the populating comprising: identifying an earliest unpopulated item of the revised processing order, determining if any treatment action of the treatment actions of the preliminary processing list comprises prerequisite thermal characteristics which are satisfied for the sequential time value of the earliest unpopulated item, assigning an assignment to the earliest unpopulated item, wherein the assignment comprises: a wait period, or the treatment action comprising prerequisite thermal characteristics which are satisfied for the sequential time value of the earliest unpopulated item, if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list, classifying the earliest unpopulated item as a populated item, and if the preliminary processing list comprises treatment actions, returning to identifying the earliest unpopulated item, or, if the preliminary processing list does not comprise treatment actions, issuing a command to begin a melt process according to the revised processing order.

The method for generating a melt strategy for an additive manufacturing system as described in any of the preceding clauses, wherein the determining if any treatment action of the treatment actions of the preliminary processing list comprises prerequisite thermal characteristics which are satisfied for the sequential time value of the earliest unpopulated item comprises comparing thermal characteristics against the prerequisite thermal characteristics of at least some of the treatment actions of the preliminary processing list.

The method for generating a melt strategy for an additive manufacturing system as described in any of the preceding clauses, wherein the thermal characteristics are determined by a thermal model.

The method for generating a melt strategy for an additive manufacturing system as described in any of the preceding clauses, wherein the thermal model comprises at least one of: finite element models of substrate and build environment temperature; a computational fluid dynamics model of melt pool behavior; a microstructure formation model; a machine learning model; a machine learning model that couples heat exposure to temperature; a machine learning model that couples heat exposure to microstructure response; a machine learning model that couples heat exposure to temperature and microstructure response; a neural network model; a neural network model that couples heat exposure to temperature; a neural network model that couples heat exposure to microstructure response; a neural network model that couples heat exposure to temperature and microstructure response; or a combination thereof.

The method for generating a melt strategy for an additive manufacturing system as described in any of the preceding clauses, wherein the prerequisite thermal characteristics of each treatment action of each melting point comprise at least one of: a melting point temperature range of the melting point; an area temperature range of at least some points within a pre-defined range of the melting point; a time value associated with a predicted temperature or a predicted temperature range of the melting point; a temperature history over a time interval of the melting point; a material state of the melting point; a material phase of the melting point; a time value associated with a predicted temperature of the melting point; a time value associated with a predicted temperature range of the melting point; a time value associated with a predicted material state of the melting point; a time value associated with a predicted material phase of the melting point; or a combination thereof.

The method for generating a melt strategy for an additive manufacturing system as described in any of the preceding clauses, wherein the at least one melt parameter of each treatment action comprises at least one of: a beam duration parameter; a beam power parameter; a beam spot diameter parameter; a beam shape parameter; a beam movement parameter; a beam movement speed parameter; or a combination thereof.

The method for generating a melt strategy for an additive manufacturing system as described in any of the preceding clauses, wherein each treatment action of each melting point comprises a pre-melting action, a melting action, or a post-melting action.

The method for generating a melt strategy for an additive manufacturing system as described in any of the preceding clauses, wherein each treatment action of each melting point comprises a heating action or a cooling action.

The method for generating a melt strategy for an additive manufacturing system as described in any of the preceding clauses, further comprising executing the melt process according to the revised processing order.

The method for generating a melt strategy for an additive manufacturing system as described in any of the preceding clauses, wherein the executing of the melt process solidifies the surface layer.

The method for generating a melt strategy for an additive manufacturing system as described in any of the preceding clauses, wherein the executing of the melt process forms at least one of: an alloy; a single crystal alloy; a single crystal superalloy; a nickel-based superalloy; a cobalt-based superalloy; a single crystal refractory alloy; a Mo-based refractory alloy; a W-based refractory alloy; a Ta-based refractory alloy; or a combination thereof..

The method for generating a melt strategy for an additive manufacturing system as described in any of the preceding clauses, wherein the points of the plurality of points are adaptively spaced.

The method for generating a melt strategy for an additive manufacturing system as described in any of the preceding clauses, wherein the populating the geometry data with the plurality of adaptively spaced points comprises at least one of: adaptively spacing lines in the geometry data; adaptively spacing curves filling out regions of the geometry data; generating fixed patterns with adaptive spacing, wherein the fixed patterns adaptively fill out regions of the geometry data; or a combination thereof.

The method for generating a melt strategy for an additive manufacturing system as described in any of the preceding clauses, wherein each melting point of the plurality of melting points comprises one or more distinct points of the plurality of points.

The method for generating a melt strategy for an additive manufacturing system as described in any of the preceding clauses, wherein the assignment comprises the wait period only if no treatment action of the treatment actions of the preliminary processing list comprises prerequisite thermal characteristics which are satisfied for the sequential time value of the earliest unpopulated item.

The method for generating a melt strategy for an additive manufacturing system as described in any of the preceding clauses, wherein the generating of a preliminary processing list comprises ordering each treatment action of each melting point according to an ordering strategy.

The method for generating a melt strategy for an additive manufacturing system as described in any of the preceding clauses, wherein the ordering strategy comprises a heat spreading strategy, a heat localizing strategy, or a combination thereof.

The method for generating a melt strategy for an additive manufacturing system as described in any of the preceding clauses, wherein the additive manufacturing system is an electron beam additive manufacturing system.

An additive manufacturing system comprising: a processor; a memory component that stores logic that, when executed by the processor, causes the system to: receive geometry data corresponding to a surface layer of a powder bed within a build chamber of the additive manufacturing system; populate the geometry data with a plurality of points comprising a plurality of melting points; assign at least one treatment action to each melting point of the plurality melting points; assign at least one melt parameter and at least one prerequisite thermal characteristic to each treatment action of each melting point; generate a preliminary processing list comprising each treatment action of each melting point; create a revised processing order comprising a plurality of sequential unpopulated items, wherein each unpopulated item of the revised processing order is associated with a sequential time value; and populate the revised processing order, the populating comprising: identifying an earliest unpopulated item of the revised processing order, determining if any treatment action of the treatment actions of the preliminary processing list comprises prerequisite thermal characteristics which are satisfied for the sequential time value of the earliest unpopulated item, assigning an assignment to the earliest unpopulated item, wherein the assignment comprises: a wait period, or the treatment action comprising prerequisite thermal characteristics which are satisfied for the sequential time value of the earliest unpopulated item, if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list, classifying the earliest unpopulated item as a populated item, and if the preliminary processing list comprises treatment actions, returning to identifying the earliest unpopulated item, or, if the preliminary processing list does not comprise treatment actions, issuing a command to begin a melt process according to the revised processing order.

The additive manufacturing system as described in any of the preceding clauses, wherein the determining if any treatment action of the treatment actions of the preliminary processing list comprises prerequisite thermal characteristics which are satisfied for the sequential time value of the earliest unpopulated item comprises comparing thermal characteristics against the prerequisite thermal characteristics of at least some of the treatment actions of the preliminary processing list.

The additive manufacturing system as described in any of the preceding clauses, further comprising a thermal model.

The additive manufacturing system as described in any of the preceding clauses, wherein the thermal characteristics are determined by a thermal model.

The additive manufacturing system as described in any of the preceding clauses, wherein the thermal model comprises at least one of: finite element models of substrate and build environment temperature; a computational fluid dynamics model of melt pool behavior; a microstructure formation model; a machine learning model; a machine learning model that couples heat exposure to temperature; a machine learning model that couples heat exposure to microstructure response; a machine learning model that couples heat exposure to temperature and microstructure response; a neural network model; a neural network model that couples heat exposure to temperature; a neural network model that couples heat exposure to microstructure response; a neural network model that couples heat exposure to temperature and microstructure response; or a combination thereof.

The additive manufacturing system as described in any of the preceding clauses, wherein the prerequisite thermal characteristics of each treatment action of each melting point comprise at least one of: a melting point temperature range of the melting point; an area temperature range of at least some points within a pre-defined range of the melting point; a time value associated with a predicted temperature or a predicted temperature range of the melting point; a temperature history over a time interval of the melting point; a material state of the melting point; a material phase of the melting point; a time value associated with a predicted temperature of the melting point; a time value associated with a predicted temperature range of the melting point; a time value associated with a predicted material state of the melting point; a time value associated with a predicted material phase of the melting point; or a combination thereof.

The additive manufacturing system as described in any of the preceding clauses, wherein the at least one melt parameter of each treatment action comprises at least one of: a beam duration parameter; a beam power parameter; a beam spot diameter parameter; a beam shape parameter; a beam movement parameter; a beam movement speed parameter; or a combination thereof.

The additive manufacturing system as described in any of the preceding clauses, wherein each treatment action of each melting point comprises a pre-melting action, a melting action, or a post-melting action.

The additive manufacturing system as described in any of the preceding clauses, wherein each treatment action of each melting point comprises a heating action or a cooling action.

The additive manufacturing system as described in any of the preceding clauses, wherein the system further executes the melt process according to the revised processing order.

The additive manufacturing system as described in any of the preceding clauses, wherein the executing of the melt process solidifies the surface layer.

The additive manufacturing system as described in any of the preceding clauses, wherein the executing of the melt process forms at least one of: an alloy; a single crystal alloy; a single crystal superalloy; a nickel-based superalloy; a cobalt-based superalloy; a single crystal refractory alloy; a Mo-based refractory alloy; a W-based refractory alloy; a Ta-based refractory alloy; or a combination thereof.

The additive manufacturing system as described in any of the preceding clauses, wherein the points of the plurality of points are adaptively spaced.

The additive manufacturing system as described in any of the preceding clauses, wherein the populating the geometry data with the plurality of adaptively spaced points comprises at least one of: adaptively spacing lines in the geometry data; adaptively spacing curves filling out regions of the geometry data; generating fixed patterns with adaptive spacing, wherein the fixed patterns adaptively fill out regions of the geometry data; or a combination thereof.

The additive manufacturing system as described in any of the preceding clauses, wherein each melting point of the plurality of melting points comprises one or more distinct points of the plurality of points.

The additive manufacturing system as described in any of the preceding clauses, wherein the assignment comprises the wait period only if no treatment action of the treatment actions of the preliminary processing list comprises prerequisite thermal characteristics which are satisfied for the sequential time value of the earliest unpopulated item.

The additive manufacturing system as described in any of the preceding clauses, wherein the generating of a preliminary processing list comprises ordering each treatment action of each melting point according to an ordering strategy.

The additive manufacturing system as described in any of the preceding clauses, wherein the ordering strategy comprises a heat spreading strategy, a heat localizing strategy, or a combination thereof.

The additive manufacturing system as described in any of the preceding clauses, wherein the additive manufacturing system is an electron beam additive manufacturing system.

A non-transitory computer-readable medium that stores logic that, when executed by a computing device, causes the computing device to perform: receive geometry data corresponding to a surface layer of a powder bed within a build chamber of an additive manufacturing system; populate the geometry data with a plurality of points comprising a plurality of melting points; assign at least one treatment action to each melting point of the plurality melting points; assign at least one melt parameter and at least one prerequisite thermal characteristic to each treatment action of each melting point; generate a preliminary processing list comprising each treatment action of each melting point; create a revised processing order comprising a plurality of sequential unpopulated items, wherein each unpopulated item of the revised processing order is associated with a sequential time value; and populate the revised processing order, the populating comprising: identifying an earliest unpopulated item of the revised processing order, determining if any treatment action of the treatment actions of the preliminary processing list comprises prerequisite thermal characteristics which are satisfied for the sequential time value of the earliest unpopulated item, assigning an assignment to the earliest unpopulated item, wherein the assignment comprises: a wait period, or the treatment action comprising prerequisite thermal characteristics which are satisfied for the sequential time value of the earliest unpopulated item, if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list, classifying the earliest unpopulated item as a populated item, and if the preliminary list comprises treatment actions, returning to identifying the earliest unpopulated item, or, if the preliminary list does not comprise treatment actions, issuing a command to begin a melt process according to the revised processing order.

The non-transitory computer-readable medium as described in any of the preceding clauses, wherein the determining if any treatment action of the treatment actions of the preliminary processing list comprises prerequisite thermal characteristics which are satisfied for the sequential time value of the earliest unpopulated item comprises comparing thermal characteristics against the prerequisite thermal characteristics of at least some of the treatment actions of the preliminary processing list.

The non-transitory computer-readable medium as described in any of the preceding clauses, wherein the thermal characteristics are determined by a thermal model.

The non-transitory computer-readable medium as described in any of the preceding clauses, wherein the thermal model comprises at least one of: finite element models of substrate and build environment temperature; a computational fluid dynamics model of melt pool behavior; a microstructure formation model; a machine learning model; a machine learning model that couples heat exposure to temperature; a machine learning model that couples heat exposure to microstructure response; a machine learning model that couples heat exposure to temperature and microstructure response; a neural network model; a neural network model that couples heat exposure to temperature; a neural network model that couples heat exposure to microstructure response; a neural network model that couples heat exposure to temperature and microstructure response; or a combination thereof.

The non-transitory computer-readable medium as described in any of the preceding clauses, wherein the prerequisite thermal characteristics of each treatment action of each melting point comprise at least one of: a melting point temperature range of the melting point; an area temperature range of at least some points within a pre-defined range of the melting point; a time value associated with a predicted temperature or a predicted temperature range of the melting point; a temperature history over a time interval of the melting point; a material state of the melting point; a material phase of the melting point; a time value associated with a predicted temperature of the melting point; a time value associated with a predicted temperature range of the melting point; a time value associated with a predicted material state of the melting point; a time value associated with a predicted material phase of the melting point; or a combination thereof.

The non-transitory computer-readable medium as described in any of the preceding clauses, wherein the at least one melt parameter of each treatment action comprises at least one of: a beam duration parameter; a beam power parameter; a beam spot diameter parameter; a beam shape parameter; a beam movement parameter; a beam movement speed parameter; or a combination thereof.

The non-transitory computer-readable medium as described in any of the preceding clauses, wherein each treatment action of each melting point comprises a pre-melting action, a melting action, or a post-melting action.

The non-transitory computer-readable medium as described in any of the preceding clauses, wherein each treatment action of each melting point comprises a heating action or a cooling action.

The non-transitory computer-readable medium as described in any of the preceding clauses, wherein the logic, when executed by the computing device, further causes the computing device to execute the melt process according to the revised processing order.

The non-transitory computer-readable medium as described in any of the preceding clauses, wherein the executing of the melt process solidifies the surface layer.

The non-transitory computer-readable medium as described in any of the preceding clauses, wherein the executing of the melt process forms at least one of: an alloy; a single crystal alloy; a single crystal superalloy; a nickel-based superalloy; a cobalt-based superalloy; a single crystal refractory alloy; a Mo-based refractory alloy; a W-based refractory alloy; a Ta-based refractory alloy; or a combination thereof.

The non-transitory computer-readable medium as described in any of the preceding clauses, wherein the points of the plurality of points are adaptively spaced.

The non-transitory computer-readable medium as described in any of the preceding clauses, wherein the populating the geometry data with the plurality of adaptively spaced points comprises at least one of: adaptively spacing lines in the geometry data; adaptively spacing curves filling out regions of the geometry data; generating fixed patterns with adaptive spacing, wherein the fixed patterns adaptively fill out regions of the geometry data; or a combination thereof.

The non-transitory computer-readable medium as described in any of the preceding clauses, wherein each melting point of the plurality of melting points comprises one or more distinct points of the plurality of points.

The non-transitory computer-readable medium as described in any of the preceding clauses, wherein the assignment comprises the wait period only if no treatment action of the treatment actions of the preliminary processing list comprises prerequisite thermal characteristics which are satisfied for the sequential time value of the earliest unpopulated item.

The non-transitory computer-readable medium as described in any of the preceding clauses, wherein the generating of a preliminary processing list comprises ordering each treatment action of each melting point according to an ordering strategy.

The non-transitory computer-readable medium as described in any of the preceding clauses, wherein the ordering strategy comprises a heat spreading strategy, a heat localizing strategy, or a combination thereof.

The non-transitory computer-readable medium as described in any of the preceding clauses, wherein the additive manufacturing system is an electron beam additive manufacturing system.

## Claims

1. A method for generating a melt strategy for an additive manufacturing system (100), the method comprising:
receiving geometry data (610, 620, 710) corresponding to a surface layer (240) of a powder bed (142) within a build chamber (150) of the additive manufacturing system (100);
populating the geometry data (610, 620, 710) with a plurality of points (611, 612, 621, 622, 711, 712, 713, 721, 722, 801, 802, 803, 804, 805, 806, 807) comprising a plurality of melting points (621, 713, 721, 722, 801, 802, 803, 804, 805, 806, 807);
assigning at least one treatment action to each melting point of the plurality melting points (621, 713, 721, 722, 801, 802, 803, 804, 805, 806, 807);
assigning at least one melt parameter and at least one prerequisite thermal characteristic to each treatment action of each melting point (621, 713, 721, 722, 801, 802, 803, 804, 805, 806, 807);
generating a preliminary processing list comprising each treatment action of each melting point;
creating a revised processing order comprising a plurality of sequential unpopulated items, wherein each unpopulated item of the revised processing order is associated with a sequential time value; and
populating the revised processing order, the populating comprising:
identifying an earliest unpopulated item of the revised processing order,
determining if any treatment action of the treatment actions of the preliminary processing list comprises prerequisite thermal characteristics which are satisfied for the sequential time value of the earliest unpopulated item,
assigning an assignment to the earliest unpopulated item, wherein the assignment comprises:
a wait period, or
the treatment action comprising prerequisite thermal characteristics which are satisfied for the sequential time value of the earliest unpopulated item,
if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list,
classifying the earliest unpopulated item as a populated item, and
if the preliminary processing list comprises treatment actions, returning to identifying the earliest unpopulated item, or, if the preliminary processing list does not comprise treatment actions, issuing a command to begin a melt process according to the revised processing order.

2. The method of claim 1, wherein the determining if any treatment action of the treatment actions of the preliminary processing list comprises prerequisite thermal characteristics which are satisfied for the sequential time value of the earliest unpopulated item comprises comparing thermal characteristics against the prerequisite thermal characteristics of at least some of the treatment actions of the preliminary processing list.

3. The method of claim 2, wherein the thermal characteristics are determined by a thermal model.

4. The method of any of claims 1-3, wherein the prerequisite thermal characteristics of each treatment action of each melting point comprise at least one of:
a melting point temperature range of the melting point (621, 713, 721, 722, 801, 802, 803, 804, 805, 806, 807);
an area temperature range of at least some points within a pre-defined range of the melting point (621, 713, 721, 722, 801, 802, 803, 804, 805, 806, 807);
a time value associated with a predicted temperature or a predicted temperature range of the melting point (621, 713, 721, 722, 801, 802, 803, 804, 805, 806, 807);
a temperature history over a time interval of the melting point (621, 713, 721, 722, 801, 802, 803, 804, 805, 806, 807);
a material state of the melting point (621, 713, 721, 722, 801, 802, 803, 804, 805, 806, 807);
a material phase of the melting point (621, 713, 721, 722, 801, 802, 803, 804, 805, 806, 807);
a time value associated with a predicted temperature of the melting point (621, 713, 721, 722, 801, 802, 803, 804, 805, 806, 807);
a time value associated with a predicted temperature range of the melting point (621, 713, 721, 722, 801, 802, 803, 804, 805, 806, 807);
a time value associated with a predicted material state of the melting point (621, 713, 721, 722, 801, 802, 803, 804, 805, 806, 807);
a time value associated with a predicted material phase of the melting point (621, 713, 721, 722, 801, 802, 803, 804, 805, 806, 807); or
a combination thereof.

5. The method of any of claims 1-4, wherein the at least one melt parameter of each treatment action comprises at least one of:
a beam duration parameter;
a beam power parameter;
a beam spot diameter parameter;
a beam shape parameter;
a beam movement parameter;
a beam movement speed parameter; or
a combination thereof.

6. The method of any of claims 1-5, wherein each treatment action of each melting point (621, 713, 721, 722, 801, 802, 803, 804, 805, 806, 807) comprises a pre-melting action, a melting action, or a post-melting action.

7. The method of any of claims 1-6, wherein each treatment action of each melting point (621, 713, 721, 722, 801, 802, 803, 804, 805, 806, 807) comprises a heating action or a cooling action.

8. The method of any of claims 1-8, the method further comprising executing the melt process according to the revised processing order.

9. The method of claim 8, wherein the executing of the melt process solidifies the surface layer (240).

10. The method of claim 9, wherein the executing of the melt process forms at least one of:
an alloy;
a single crystal alloy;
a single crystal superalloy;
a nickel-based superalloy;
a cobalt-based superalloy;
a single crystal refractory alloy;
an Mo-based refractory alloy;
a W-based refractory alloy;
a Ta-based refractory alloy;
or a combination thereof.

11. The method of any of claims 1-10, wherein the plurality of points (611, 612, 621, 622, 711, 712, 713, 721, 722, 801, 802, 803, 804, 805, 806, 807) are adaptively spaced.

12. The method of any of claims 1-11, wherein the assignment comprises the wait period only if no treatment action of the treatment actions of the preliminary processing list comprises prerequisite thermal characteristics which are satisfied for the sequential time value of the earliest unpopulated item.

13. The method of any of claims 1-12, wherein the additive manufacturing system (100) is an electron beam additive manufacturing system.

14. An additive manufacturing system (100) comprising:
a processor (124);
a memory component (130) that stores logic that, when executed by the processor (124), causes the additive manufacturing system (100) to perform at least the following:
receive geometry data (610, 620, 710) corresponding to a surface layer (240) of a powder bed (142) within a build chamber (150) of the additive manufacturing system (100);
populate the geometry data (610, 620, 710) with a plurality of points (611, 612, 621, 622, 711, 712, 713, 721, 722, 801, 802, 803, 804, 805, 806, 807) comprising a plurality of melting points (621, 713, 721, 722, 801, 802, 803, 804, 805, 806, 807);
assign at least one treatment action to each melting point of the plurality melting points (621, 713, 721, 722, 801, 802, 803, 804, 805, 806, 807);
assign at least one melt parameter and at least one prerequisite thermal characteristic to each treatment action of each melting point (621, 713, 721, 722, 801, 802, 803, 804, 805, 806, 807);
generate a preliminary processing list comprising each treatment action of each melting point (621, 713, 721, 722, 801, 802, 803, 804, 805, 806, 807);
create a revised processing order comprising a plurality of sequential unpopulated items, wherein each unpopulated item of the revised processing order is associated with a sequential time value; and
populate the revised processing order, the populating comprising:
identifying an earliest unpopulated item of the revised processing order,
determining if any treatment action of the treatment actions of the preliminary processing list comprises prerequisite thermal characteristics which are satisfied for the sequential time value of the earliest unpopulated item,
assigning an assignment to the earliest unpopulated item, wherein the assignment comprises:
a wait period, or
the treatment action comprising prerequisite thermal characteristics which are satisfied for the sequential time value of the earliest unpopulated item,
if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list,
classifying the earliest unpopulated item as a populated item, and
if the preliminary processing list comprises treatment actions, returning to identifying the earliest unpopulated item, or, if the preliminary processing list does not comprise treatment actions, issuing a command to begin a melt process according to the revised processing order.

15. A non-transitory computer-readable medium that stores logic that, when executed by a computing device (106), causes the computing device (106) to perform at least the following:
receive geometry data (610, 620, 710) corresponding to a surface layer (240) of a powder bed (142) within a build chamber (150) of an additive manufacturing system (100);
populate the geometry data (610, 620, 710) with a plurality of points (611, 612, 621, 622, 711, 712, 713, 721, 722, 801, 802, 803, 804, 805, 806, 807) comprising a plurality of melting points (621, 713, 721, 722, 801, 802, 803, 804, 805, 806, 807);
assign at least one treatment action to each melting point of the plurality melting points (621, 713, 721, 722, 801, 802, 803, 804, 805, 806, 807);
assign at least one melt parameter and at least one prerequisite thermal characteristic to each treatment action of each melting point (621, 713, 721, 722, 801, 802, 803, 804, 805, 806, 807);
generate a preliminary processing list comprising each treatment action of each melting point (621, 713, 721, 722, 801, 802, 803, 804, 805, 806, 807);
create a revised processing order comprising a plurality of sequential unpopulated items, wherein each unpopulated item of the revised processing order is associated with a sequential time value; and
populate the revised processing order, the populating comprising:
identifying an earliest unpopulated item of the revised processing order,
determining if any treatment action of the treatment actions of the preliminary processing list comprises prerequisite thermal characteristics which are satisfied for the sequential time value of the earliest unpopulated item,
assigning an assignment to the earliest unpopulated item, wherein the assignment comprises:
a wait period, or
the treatment action comprising prerequisite thermal characteristics which are satisfied for the sequential time value of the earliest unpopulated item,
if the assignment comprises the treatment action comprising prerequisite thermal characteristics which are satisfied for the sequential time value of the earliest unpopulated item, removing the treatment action comprising prerequisite thermal characteristics which are satisfied for the sequential time value of the earliest unpopulated item from the preliminary processing list,
classifying the earliest unpopulated item as a populated item, and
if the preliminary list comprises treatment actions, returning to identifying the earliest unpopulated item, or, if the preliminary list does not comprise treatment actions, issuing a command to begin a melt process according to the revised processing order.
